# EUROPEAN PATENT APPLICATION

(11) **EP 4 564 903 A1**
(43) Date of publication of application: **04.06.2025**
(21) Application number: 23851471.5
(22) Date of filing: 30.06.2023
(51) Int. Cl.: H04W 28/16

(54) **COMMUNICATION METHOD AND COMMUNICATION APPARATUS**

(30) Priority: 10.08.2022 CN 202210956579
(71) Applicant: Huawei Technologies Co., Ltd., Shenzhen, Guangdong 518129 (CN)
(72) Inventor: WU, Yizhuang, Shenzhen, Guangdong 518129 (CN); SCHRAMM, Mirko, Shenzhen, Guangdong 518129 (CN); SUN, Haiyang, Shenzhen, Guangdong 518129 (CN)
(74) Representative: Maiwald GmbH
(86) International application number: PCT/CN2023/104686
(87) International publication number: WO 2024/032244

(57) **Abstract**

Embodiments of this application provide a communication method and a communication apparatus. The communication method includes: A first network element receives, from an AMF, a first per UE per slice-maximum bit rate UE-Slice-MBR of a slice #1 of a terminal device, where the first UE-Slice-MBR is provided by a slice authentication, authorization, and accounting AAA server. The first network element determines a second UE-Slice-MBR based on the first UE-Slice-MBR, where the second UE-Slice-MBR is an authorized UE-Slice-MBR. The first network element sends a first data management message to a unified data repository network element UDR, where the first data management message includes the second UE-Slice-MBR. In this way, a UE-Slice-MBR can be more flexibly provided without exposing a network capability, to control use of a slice resource by UE, thereby improving user experience.

## Description

This application claims priority to Chinese Patent Application No. 202210956579.3, filed with the China National Intellectual Property Administration on August 10, 2022 and entitled "COMMUNICATION METHOD AND COMMUNICATION APPARATUS", which is incorporated herein by reference in its entirety.

### TECHNICAL FIELD

Embodiments of this application relate to the field of wireless communication technologies, and more specifically, to a communication method and a communication apparatus.

### BACKGROUND

Network slicing (network slicing, NS) refers to customizing different logical networks on a physical or virtual network infrastructure based on service requirements of different services. To control use of a slice resource by a terminal device (user equipment, UE), maximum uplink and downlink data rates of each slice in each UE are controlled by using a per UE per slice-maximum bit rate (per UE per slice-maximum bit rate, UE-Slice-MBR) parameter.

Currently, the UE-Slice-MBR is stored in a unified data management (unified data management, UDM) through subscription, and is obtained, in a UE registration process, from the UDM by an access and mobility management function (access and mobility management function, AMF) that serves the UE. Alternatively, the UE-Slice-MBR is stored in a unified data repository (unified data repository, UDR), and is obtained, in a process of establishing a protocol data unit (protocol data unit, PDU) session by the UE, from the UDR by a PCF serving the PDU session.

Therefore, how to provide the UE-Slice-MBR more flexibly to control use of a slice resource by the UE is an urgent problem to be resolved.

### SUMMARY

Embodiments of this application provide a communication method, so that a UE-Slice-MBR can be more flexibly provided without exposing a network capability, to control use of a slice resource by UE, thereby improving user experience.

According to a first aspect, a communication method is provided. The method may be performed by a first network element, or may be performed by a component (for example, a chip or a circuit) of a first network element. This is not limited. For ease of description, the following uses an example in which the method is performed by the first network element for description.

The method may include: The first network element receives a first per UE per slice-maximum bit rate UE-Slice-MBR of a slice #1 of a terminal device from an access and mobility management function network element AMF. The first UE-Slice-MBR is provided by a slice authentication, authorization, and accounting AAA server. The first network element determines a second UE-Slice-MBR based on the first UE-Slice-MBR. The second UE-Slice-MBR is an authorized UE-Slice-MBR. The first network element sends a first data management message to a unified data repository network element UDR. The first data management message includes the second UE-Slice-MBR.

It should be noted that the slice #1 may be any slice in the terminal device, and the slice #1 may also be referred to as a first slice or another name. This is not limited in this application.

Based on the foregoing solution, the first network element (PCF) stores the UE-Slice-MBR from the AAA server in PDU session policy control subscription information of the UDR, so that a PCF serving a PDU session of UE can obtain the UE-Slice-MBR provided by the AAA. In this way, when a RAN does not support control of the UE-Slice-MBR, the PCF can perform monitoring based on the UE-Slice-MBR.

With reference to the first aspect, in some implementations of the first aspect, that the first network element receives a first UE-Slice-MBR from an AMF includes: The first network element receives ueSliceMbr from the AMF. The ueSliceMbr includes the first UE-Slice-MBR.

Based on the foregoing solution, the AMF sends, to the first network element, the first UE-Slice-MBR carried in the ueSliceMbr. Therefore, the first UE-Slice-MBR is transferred by reusing an existing information element, thereby reducing signaling overheads.

With reference to the first aspect, in some implementations of the first aspect, the first data management message further includes: a data set identifier and a data keyword. The data set identifier indicates policy data, and the data keyword indicates the terminal device.

Based on the foregoing solution, the UDR can manage a UE-Slice-MBR of the terminal device in the policy data.

With reference to the first aspect, in some implementations of the first aspect, the first data management message further includes: a data subset identifier and/or a data subkeyword. The data subset identifier indicates protocol data unit PDU session policy control data, and the data subkeyword indicates the slice #1.

Based on the foregoing solution, the UDR can manage a UE-Slice-MBR of the slice 1 in the PDU session policy control data.

With reference to the first aspect, in some implementations of the first aspect, the first data management message further includes identification information of the slice #1. With reference to the first aspect, in some implementations of the first aspect, that the first network element sends a first data management message to a UDR includes: The first network element determines that the terminal device is a non-roaming terminal device. The first network element sends the first data management message to the UDR.

Based on the foregoing solution, for the non-roaming terminal device, the first network element requests the UDR to update a parameter of a slice in the terminal device, so that only a PCF in a non-roaming scenario can manage a parameter of a slice in the UDR.

With reference to the first aspect, in some implementations of the first aspect, the first network element is a policy control function network element.

According to a second aspect, a communication method is provided. The method may be performed by a unified repository network element UDR, or may be performed by a component (for example, a chip or a circuit) of a UDR. This is not limited. For ease of description, the following uses an example in which the method is performed by the UDR for description.

The method may include: The unified repository network element UDR receives an authorized UE-Slice-MBR of a slice #1 of a terminal device. The UDR configures a parameter of the slice #1 based on the authorized UE-Slice-MBR.

Based on the foregoing solution, the UDR can configure the parameter of the slice #1 based on a received data management message, and provide the authorized UE-Slice-MBR for a PCF, so that a UE-Slice-MBR is provided more flexibly without exposing a network capability.

With reference to the second aspect, in some implementations of the second aspect, that the UDR receives an authorized UE-Slice-MBR includes: The UDR receives a first data management message from a first network element. The first data management message includes a second UE-Slice-MBR, and the second UE-Slice-MBR is the authorized UE-Slice-MBR.

Based on the foregoing solution, the UDR can receive the authorized UE-Slice-MBR from the first network element, thereby increasing flexibility of the solution for obtaining the authorized UE-Slice-MBR.

With reference to the second aspect, in some implementations of the second aspect, the first data management message further includes: a data set identifier and a data keyword. The data set identifier indicates policy data, and the data keyword indicates the terminal device.

Based on the foregoing solution, the UDR can manage a UE-Slice-MBR of the terminal device in the policy data.

With reference to the second aspect, in some implementations of the second aspect, the first data management message further includes: a data subset identifier and/or a data subkeyword. The data subset identifier indicates protocol data unit PDU session policy control data, and the data subkeyword indicates the slice #1.

Based on the foregoing solution, the UDR can manage a UE-Slice-MBR of the slice 1 in the PDU session policy control data.

With reference to the second aspect, in some implementations of the second aspect, that the UDR configures a parameter of the slice #1 based on the authorized UE-Slice-MBR includes: The UDR stores the second UE-Slice-MBR in the parameter of the slice #1 in the protocol data unit PDU session policy control data.

Based on the foregoing solution, the authorized UE-Slice-MBR is stored in the UDR, so that a PCF network element serving a PDU session of UE can obtain the second UE-Slice-MBR, thereby monitoring use of a slice resource.

With reference to the second aspect, in some implementations of the second aspect, that the UDR stores the authorized UE-Slice-MBR in the PDU session policy control information of the slice #1 includes: When there is a third UE-Slice-MBR stored in the UDR, the UDR updates the third UE-Slice-MBR to the second UE-Slice-MBR.

Based on the foregoing solution, when the UDR stores a subscribed UE-Slice-MBR, the UDR can update the subscribed UE-Slice-MBR to the authorized UE-Slice-MBR.

With reference to the second aspect, in some implementations of the second aspect, that the UDR stores the authorized UE-Slice-MBR in the PDU session policy control information of the slice #1 includes: When there is a fourth UE-Slice-MBR stored in the UDR, the UDR adds the second UE-Slice-MBR to the parameter of the slice #1 in the PDU session policy control information. The fourth UE-Slice-MBR is a subscribed UE-Slice-MBR.

Based on the foregoing solution, when the UDR stores the subscribed UE-Slice-MBR, the UDR can add the authorized UE-Slice-MBR to the PDU session policy control information.

With reference to the second aspect, in some implementations of the second aspect, that the UDR receives an authorized UE-Slice-MBR includes: The UDR receives a second data management message from a third network element. The second data management message includes a fifth UE-Slice-MBR, and the fifth UE-Slice-MBR is the authorized UE-Slice-MBR.

Based on the foregoing solution, the UDR can receive the authorized UE-Slice-MBR from the third network element, thereby increasing flexibility of the solution for obtaining the authorized UE-Slice-MBR.

With reference to the second aspect, in some implementations of the second aspect, the second data management message further includes: a data set identifier and a data keyword. The data set identifier indicates subscription data, and the data keyword indicates the terminal device.

Based on the foregoing solution, the UDR can manage a UE-Slice-MBR of the terminal device in the subscription data.

With reference to the second aspect, in some implementations of the second aspect, the second data management message further includes: a data subset identifier and/or a data subkeyword. The data subset identifier indicates access and mobility subscription data, and the data subkeyword indicates the slice #1.

Based on the foregoing solution, the UDR can manage a UE-Slice-MBR of the slice 1 in the access and mobility subscription data.

With reference to the second aspect, in some implementations of the second aspect, that the UDR configures a parameter of the slice #1 based on the authorized UE-Slice-MBR includes: The UDR stores the fifth UE-Slice-MBR in the parameter of the slice #1 in the access and mobility subscription data information.

Based on the foregoing solution, the UDR can store the authorized UE-Slice-MBR in the access and mobility subscription data information based on the data management message, so that an AMF and a PCF can obtain the same UE-Slice-MBR, thereby further ensuring implementation of a characteristic of the UE-Slice-MBR without sensing a network capability.

With reference to the second aspect, in some implementations of the second aspect, the second data management message further includes: a first data set identifier, a second data set identifier, and a data keyword. The first data set identifier indicates subscription data, the second data set identifier indicates policy data, and the data keyword indicates the terminal device.

Based on the foregoing solution, the UDR can manage a UE-Slice-MBR of the terminal device in the subscription data.

With reference to the second aspect, in some implementations of the second aspect, that the UDR configures a parameter of the slice #1 based on the authorized UE-Slice-MBR includes: The UDR separately stores the fifth UE-Slice-MBR in a parameter of the slice #1 in access and mobility subscription data and a parameter of the slice #1 in PDU session policy control data.

Based on the foregoing solution, the UDR can manage a UE-Slice-MBR of the slice 1 in the access and mobility subscription data and the PDU session policy control data.

With reference to the second aspect, in some implementations of the second aspect, that the UDR receives an authorized UE-Slice-MBR includes: The UDR receives a third data management message from a fourth network element. The third data management message includes a fifth UE-Slice-MBR, and the fifth UE-Slice-MBR is the authorized UE-Slice-MBR.

Based on the foregoing solution, the UDR can receive the authorized UE-Slice-MBR from the fourth network element, thereby increasing flexibility of the solution for obtaining the authorized UE-Slice-MBR.

With reference to the second aspect, in some implementations of the second aspect, that the UDR receives a data management message from a fourth network element includes: The UDR sends a second data management response message to a third network element. The second data management response message indicates that the fifth UE-Slice-MBR is successfully configured. The UDR receives the third data management message from the fourth network element.

Based on the foregoing solution, after configuring the access and mobility subscription data information, the UDR further configures the PDU session policy control data. If the UDR unsuccessfully configures the access and mobility subscription data information, the UDR does not configure the PDU session policy control data.

With reference to the second aspect, in some implementations of the second aspect, the third data management message further includes: a data set identifier and a data keyword. The data set identifier indicates policy data, and the data keyword indicates the terminal device.

Based on the foregoing solution, the UDR can manage a UE-Slice-MBR of the terminal device in the policy data.

With reference to the second aspect, in some implementations of the second aspect, the third data management message further includes: a data subset identifier and/or a data subkeyword. The data subset identifier indicates PDU session policy control data, and the data subkeyword indicates the slice #1.

Based on the foregoing solution, the UDR can manage a UE-Slice-MBR of the slice #1 in the PDU session policy control data.

With reference to the second aspect, in some implementations of the second aspect, that the UDR configures a parameter of the slice #1 based on the data management message includes: The UDR stores the fifth UE-Slice-MBR in the parameter of the slice #1 in the PDU session policy control information.

Based on the foregoing solution, the UDR can store the authorized UE-Slice-MBR in the PDU session policy control information based on the data management message, so that an AMF and a PCF can obtain the same UE-Slice-MBR, thereby further ensuring implementation of a characteristic of the UE-Slice-MBR without sensing a network capability.

According to a third aspect, a communication method is provided. The method may be performed by a network exposure function network element NEF, or may be performed by a component (for example, a chip or a circuit) of a NEF. This is not limited herein. For ease of description, the following uses an example in which the method is performed by the NEF for description.

The method may include: The network exposure function network element NEF receives a first slice parameter configuration message from an application function network element AF. The first slice parameter configuration message includes identification information of a slice #1 of a terminal device, a fifth per UE per slice-maximum bit rate UE-Slice-MBR, and a first identifier of the terminal device, and the fifth UE-Slice-MBR is an authorized UE-Slice-MBR. The NEF sends a second slice parameter configuration message to a third network element based on the first slice parameter configuration message. The second slice parameter configuration message includes the identification information of the slice #1, the fifth UE-Slice-MBR, and a second identifier of the terminal device, and the second identifier of the terminal device is determined by the NEF based on the first identifier of the terminal device.

Based on the foregoing solution, a new service message is introduced, the AF provides the UE-Slice-MBR through the NEF, and further, the NEF manages a UE-Slice-MBR in access and mobility subscription data in a UDR through a third network element (UDM). In this way, an AMF and a PCF can obtain the same UE-Slice-MBR, thereby further ensuring implementation of a characteristic of the UE-Slice-MBR without sensing a network capability.

With reference to the third aspect, in some implementations of the third aspect, the method further includes: The NEF sends a third slice parameter configuration message to a fourth network element based on the first slice parameter configuration message. The third slice parameter configuration message includes the identification information of the slice #1, the fifth UE-Slice-MBR, and the second identifier of the terminal device.

Based on the foregoing solution, a new service message is introduced, the AF provides the UE-Slice-MBR through the NEF, and further, the NEF manages a UE-Slice-MBR in PDU session policy control data in a UDR through a fourth network element (PCF). In this way, an AMF and a PCF can obtain the same UE-Slice-MBR, thereby further ensuring implementation of a characteristic of the UE-Slice-MBR without sensing a network capability.

With reference to the third aspect, in some implementations of the third aspect, that the NEF sends a third slice parameter configuration message to a fourth network element based on the first slice parameter configuration message includes: The NEF receives a second slice parameter configuration message response message from the third network element. The second slice parameter configuration message response message indicates that a parameter of the slice #1 is successfully configured. The NEF sends the third slice parameter configuration message to the fourth network element.

Based on the foregoing solution, after the access and mobility subscription data information is configured, the PDU session policy control data is further configured, and if the UDR unsuccessfully configures the access and mobility subscription data information, the PDU session policy control data is not configured, thereby reducing signaling overheads.

With reference to the second aspect and the third aspect, in some implementations of the third aspect, the method further includes: The NEF determines that the AF has permission to invoke a slice parameter configuration service. The NEF sends the second slice parameter configuration message to the third network element.

Based on the foregoing solution, the NEF needs to determine whether the AF has the permission to invoke the slice parameter configuration service, and when the AF has the permission to invoke the slice parameter configuration service, the NEF further uses the UE-Slice-MBR provided by the AF to perform configuration.

With reference to the third aspect, in some implementations of the third aspect, the method further includes: The NEF sends the first identifier of the terminal device to a unified data management network element UDM. The NEF receives the second identifier of the terminal device from the UDM.

Based on the foregoing solution, when the AF has the permission to invoke the slice parameter configuration service, the UDM performs identifier conversion on the first identifier of the terminal device from the AF in a manner of interacting with the UDM, to learn identification information of the terminal device that needs to be managed.

With reference to the third aspect, in some implementations of the third aspect, the method further includes: The NEF sends the first identifier of the terminal device to a binding support function network element BSF and/or a policy control function network element PCF. The NEF receives the second identifier of the terminal device from the BSF and/or the PCF.

Based on the foregoing solution, when the AF has the permission to invoke the slice parameter configuration service, the UDM performs identifier conversion on the first identifier of the terminal device from the AF in a manner of interacting with the BSF and/or the PCF, to learn of identification information of the terminal device that needs to be managed.

According to a fourth aspect, a communication method is provided. The method may be performed by an application function network element AF, or may be performed by a component (for example, a chip or a circuit) of an AF. This is not limited herein. For ease of description, the following uses an example in which the method is performed by the AF for description.

The method may include: The application function network element AF sends first request information to a network exposure function network element NEF. The first request information is used to provide a parameter of a network slice, the first request information includes identification information of a slice #1, a fifth per UE per slice-maximum bit rate UE-Slice-MBR, and identification information of a terminal device, the fifth UE-Slice-MBR is a subscribed fifth UE-Slice-MBR, and a network slice that the terminal device is allowed to access includes the slice #1. The AF receives first request response information from the NEF. The first request response information indicates that configuration of the parameter of the network slice accessed by the terminal device is completed.

Based on the foregoing solution, a new service message is introduced, the AF provides the UE-Slice-MBR through the NEF, and further, the NEF separately updates a UE-Slice-MBR in access and mobility subscription data in a UDR through a UDM and a UE-Slice-MBR in PDU session policy control data in the UDR through a PCF. In this way, an AMF and a PCF can obtain the same UE-Slice-MBR, thereby further ensuring implementation of a characteristic of the UE-Slice-MBR without sensing a network capability.

According to a fifth aspect, a communication method is provided. The method may be performed by an access and mobility management function network element AMF, or may be performed by a component (for example, a chip or a circuit) of an AMF. This is not limited herein. For ease of description, the following uses an example in which the method is performed by the AMF for description.

The method may include: The access and mobility management function network element AMF locally obtains a second UE-Slice-MBR. The second UE-Slice-MBR is an authorized UE-Slice-MBR of a slice #1 of a terminal device. The AMF sends a first request message to a session management network element SMF. The first request message is used to establish a protocol data unit PDU session of the slice #1, and the first request message includes the second UE-Slice-MBR and identification information of the slice #1.

Based on the foregoing solution, the AMF provides a UE-Slice-MBR from an AAA server in a PDU session establishment process, so that an SM-PCF obtains the UE-Slice-MBR provided by the AAA server. In this way, when a RAN does not support control of the UE-Slice-MBR, a PCF can perform monitoring based on the UE-Slice-MBR. That is, when a network uses the PCF to control use of a slice resource by the terminal device, the PCF can obtain a correct UE-Slice-MBR to detect a data rate.

With reference to the fifth aspect, in some implementations of the fifth aspect, the method further includes: The AMF receives the second UE-Slice-MBR from the slice authentication, authorization, and accounting AAA server. The AMF stores the second UE-Slice-MBR.

Based on the foregoing solution, the AMF can locally store the authorized UE-Slice-MBR from the AAA server, thereby increasing diversity of the solution for obtaining the authorized UE-Slice-MBR.

With reference to the fifth aspect, in some implementations of the fifth aspect, the method further includes: The AMF receives the second UE-Slice-MBR from a first network element. The AMF stores the second UE-Slice-MBR.

Based on the foregoing solution, the AMF can locally store the authorized UE-Slice-MBR from the first network element, thereby increasing diversity of the solution for obtaining the authorized UE-Slice-MBR.

With reference to the fifth aspect, in some implementations of the fifth aspect, the method further includes: The AMF receives a first per UE per slice-maximum bit rate UE-Slice-MBR of the slice #1 from the slice authentication, authorization, and accounting AAA server. The AMF sends ueSliceMbr to the first network element. The ueSliceMbr includes the first UE-Slice-MBR. The AMF receives the second UE-Slice-MBR from the first network element. The second UE-Slice-MBR is determined by the first UE-Slice-MBR.

Based on the foregoing solution, the AMF can locally store the second UE-Slice-MBR that is from the first network element and that is determined by the first network element based on the authorized UE-Slice-MBR from the AAA server, thereby increasing diversity of the solution for obtaining the authorized UE-Slice-MBR.

With reference to the fifth aspect, in some implementations of the fifth aspect, the method further includes: The AMF receives a second request message from the terminal device. The second request message includes a PDU session establishment request message and an identifier of the slice #1. That the AMF locally obtains a second UE-Slice-MBR includes: The AMF locally obtains the second UE-Slice-MBR based on the identification information of the slice #1.

Based on the foregoing solution, the AMF can correspondingly select an authorized UE-Slice-MBR locally based on identification information of a slice of the terminal device. In this way, when a RAN does not support control of the UE-Slice-MBR, the PCF can monitor a data rate based on the authorized UE-Slice-MBR. That is, when a network uses the PCF to control use of a slice resource by the terminal device, the PCF can obtain a correct UE-Slice-MBR to detect the data rate.

With reference to the fifth aspect, in some implementations of the fifth aspect, the method further includes: The AMF receives a third per UE per slice-maximum bit rate UE-Slice-MBR from a unified data management network element UDM. The third UE-Slice-MBR is a subscribed UE-Slice-MBR of the slice #1.

Based on the foregoing solution, the AMF can locally store the second UE-Slice-MBR determined based on the authorized UE-Slice-MBR from the UDM, thereby increasing diversity of the solution for obtaining the authorized UE-Slice-MBR.

With reference to the fifth aspect, in some implementations of the fifth aspect, the method further includes: The AMF sends the second UE-Slice-MBR and the identification information of the slice #1 to an access network node.

According to a sixth aspect, a communication method is provided. The method may be performed by a second network element, or may be performed by a component (for example, a chip or a circuit) of a second network element. This is not limited. For ease of description, the following uses an example in which the method is performed by the second network element for description.

The method may include: The second network element receives a session management policy control request from a session management function network element SMF. The session management policy control request includes an identifier of a terminal device, identification information of a slice #1 of the terminal device, and a second UE-Slice-MBR, and the second UE-Slice-MBR is an authorized UE-Slice-MBR of the slice #1. The second network element monitors a data rate of the slice #1 based on the second UE-Slice-MBR.

Based on the foregoing solution, when a RAN does not support control of a UE-Slice-MBR, the second network element (SM-PCF) can monitor a data rate of a slice of the terminal device based on an authorized UE-Slice-MBR selected by an AMF. That is, when a network uses a PCF to control use of a slice resource by the terminal device, the PCF can obtain a correct UE-Slice-MBR to detect the data rate.

With reference to the sixth aspect, in some implementations of the sixth aspect, the method further includes: The second network element sends a third request message to a unified data repository network element UDR. The third request message is used to obtain protocol data unit PDU session policy control information. The second network element receives a subscribed UE-Slice-MBR from the UDR.

According to a seventh aspect, a communication system is provided. The communication system may include: a session management function network element SMF, configured to: receive a first request message from an access and mobility management function network element AMF, where the first request message is used to establish a protocol data unit PDU session of a slice #1 of a terminal device, the first request message includes a second UE-Slice-MBR and identification information of the slice #1, and the second UE-Slice-MBR is an authorized UE-Slice-MBR of the slice #1; and send a session management policy control request to a second network element, where the session management policy control request includes an identifier of the terminal device, the identification information of the slice #1, and the second UE-Slice-MBR, and the second network element monitors a data rate of the slice #1 based on the second UE-Slice-MBR.

Based on the foregoing solution, the AMF provides a UE-Slice-MBR from an AAA in a PDU session establishment process, so that an SM-PCF obtains the UE-Slice-MBR provided by the AAA. In this way, when a RAN does not support control of the UE-Slice-MBR, a PCF can monitor a data rate of a slice of the terminal device based on the UE-Slice-MBR. That is, when a network uses the PCF to control use of a slice resource by the terminal device, the PCF can obtain a correct UE-Slice-MBR to detect the data rate.

According to an eighth aspect, a communication apparatus is provided, including a unit configured to perform the method shown in the first aspect. The communication apparatus may be a first network element, or may be a chip or a circuit disposed in a first network element. This is not limited in this application.

The communication apparatus includes:
a transceiver unit, configured to receive a first per UE per slice-maximum bit rate UE-Slice-MBR of a slice #1 of a terminal device from an access and mobility management function network element AMF, where the first UE-Slice-MBR is provided by a slice authentication, authorization, and accounting AAA server; and a processing unit, configured to determine a second UE-Slice-MBR based on the first UE-Slice-MBR, where the second UE-Slice-MBR is an authorized UE-Slice-MBR, and the transceiver unit is further configured to send a first data management message to a unified data repository network element UDR, where the first data management message includes the second UE-Slice-MBR.

With reference to the eighth aspect, in some implementations of the eighth aspect, the transceiver unit is further configured to receive ueSliceMbr from the AMF, where the ueSliceMbr includes the first UE-Slice-MBR.

With reference to the eighth aspect, in some implementations of the eighth aspect, the first data management message further includes: a data set identifier and a data keyword. The data set identifier indicates policy data, and the data keyword indicates the terminal device.

With reference to the eighth aspect, in some implementations of the eighth aspect, the first data management message further includes: a data subset identifier and/or a data subkeyword. The data subset identifier indicates protocol data unit PDU session policy control data, and the data subkeyword indicates the slice #1.

With reference to the eighth aspect, in some implementations of the eighth aspect, the first data management message further includes identification information of the slice #1.

With reference to the eighth aspect, in some implementations of the eighth aspect, the processing unit is further configured to determine that the terminal device is a non-roaming terminal device; and the transceiver unit is further configured to send the first data management message to the UDR.

With reference to the eighth aspect, in some implementations of the eighth aspect, the first network element is a policy control function network element.

For explanations and beneficial effects of related content of the communication apparatus provided in the eighth aspect, refer to the method shown in the first aspect. Details are not described herein again.

According to a ninth aspect, a communication apparatus is provided, including a unit configured to perform the method shown in the second aspect. The communication apparatus may be a unified repository network element UDR, or may be a chip or a circuit disposed in a UDR. This is not limited in this application.

The communication apparatus includes:
a transceiver unit, configured to receive an authorized UE-Slice-MBR of a slice #1 of a terminal device; and a processing unit, configured to configure a parameter of the slice #1 based on the authorized UE-Slice-MBR.

With reference to the ninth aspect, in some implementations of the ninth aspect, the UDR receives the authorized UE-Slice-MBR, and the transceiver unit is further configured to receive a first data management message from a first network element, where the first data management message includes a second UE-Slice-MBR, and the second UE-Slice-MBR is the authorized UE-Slice-MBR.

With reference to the ninth aspect, in some implementations of the ninth aspect, the first data management message further includes: a data set identifier and a data keyword. The data set identifier indicates policy data, and the data keyword indicates the terminal device.

With reference to the ninth aspect, in some implementations of the ninth aspect, the first data management message further includes: a data subset identifier and/or a data subkeyword. The data subset identifier indicates protocol data unit PDU session policy control data, and the data subkeyword indicates the slice #1.

With reference to the ninth aspect, in some implementations of the ninth aspect, the processing unit is further configured to store the second UE-Slice-MBR in the parameter of the slice #1 in the protocol data unit PDU session policy control data.

With reference to the ninth aspect, in some implementations of the ninth aspect, when there is a third UE-Slice-MBR stored in the UDR, the processing unit is further configured to update the third UE-Slice-MBR to the second UE-Slice-MBR.

With reference to the ninth aspect, in some implementations of the ninth aspect, when there is a fourth UE-Slice-MBR stored in the UDR, the processing unit is further configured to add the second UE-Slice-MBR to the parameter of the slice #1 in the PDU session policy control information, where the fourth UE-Slice-MBR is a subscribed UE-Slice-MBR.

With reference to the ninth aspect, in some implementations of the ninth aspect, the transceiver unit is further configured to receive a second data management message from a third network element, where the second data management message includes a fifth UE-Slice-MBR, and the fifth UE-Slice-MBR is the authorized UE-Slice-MBR.

With reference to the ninth aspect, in some implementations of the ninth aspect, the second data management message further includes: a data set identifier and a data keyword. The data set identifier indicates subscription data, and the data keyword indicates the terminal device.

With reference to the ninth aspect, in some implementations of the ninth aspect, the second data management message further includes: a data subset identifier and/or a data subkeyword. The data subset identifier indicates access and mobility subscription data, and the data subkeyword indicates the slice #1.

With reference to the ninth aspect, in some implementations of the ninth aspect, the processing unit is further configured to store the fifth UE-Slice-MBR in the parameter of the slice #1 in the access and mobility subscription data information.

With reference to the ninth aspect, in some implementations of the ninth aspect, the transceiver unit is further configured to receive a third data management message from a fourth network element, where the third data management message includes a fifth UE-Slice-MBR, and the fifth UE-Slice-MBR is the authorized UE-Slice-MBR.

With reference to the ninth aspect, in some implementations of the ninth aspect, the second data management message further includes: a first data set identifier, a second data set identifier, and a data keyword. The first data set identifier indicates subscription data, the second data set identifier indicates policy data, and the data keyword indicates the terminal device.

With reference to the ninth aspect, in some implementations of the ninth aspect, the processing unit is further configured to separately store the fifth UE-Slice-MBR in a parameter of the slice #1 in access and mobility subscription data and a parameter of the slice #1 in PDU session policy control data.

With reference to the ninth aspect, in some implementations of the ninth aspect, that the UDR receives the authorized UE-Slice-MBR includes: The UDR receives the third data management message from the fourth network element, where the third data management message includes the fifth UE-Slice-MBR, and the fifth UE-Slice-MBR is the authorized UE-Slice-MBR.

With reference to the ninth aspect, in some implementations of the ninth aspect, the transceiver unit is further configured to send a second data management response message to a third network element, where the second data management response message indicates that the fifth UE-Slice-MBR is successfully configured; and the transceiver unit is further configured to receive the third data management message from the fourth network element.

With reference to the ninth aspect, in some implementations of the ninth aspect, the third data management message further includes: a data set identifier and a data keyword. The data set identifier indicates policy data, and the data keyword indicates the terminal device.

With reference to the ninth aspect, in some implementations of the ninth aspect, the third data management message further includes: a data subset identifier and/or a data subkeyword. The data subset identifier indicates PDU session policy control data, and the data subkeyword indicates the slice #1.

With reference to the ninth aspect, in some implementations of the ninth aspect, the processing unit is further configured to store the fifth UE-Slice-MBR in the parameter of the slice #1 in the PDU session policy control information.

For explanations and beneficial effects of related content of the communication apparatus provided in the ninth aspect, refer to the method shown in the second aspect. Details are not described herein again.

According to a tenth aspect, a communication apparatus is provided, including a unit configured to perform the method shown in the third aspect. The communication apparatus may be a network exposure function network element NEF, or may be performed by a chip or a circuit disposed in a network exposure function network element NEF. This is not limited in this application.

The communication apparatus includes:
a transceiver unit, configured to receive a first slice parameter configuration message from an application function network element AF, where the first slice parameter configuration message includes identification information of a slice #1 of a terminal device, a fifth per UE per slice-maximum bit rate UE-Slice-MBR, and a first identifier of the terminal device, and the fifth UE-Slice-MBR is an authorized UE-Slice-MBR. The transceiver unit is further configured to send a second slice parameter configuration message to a third network element based on the first slice parameter configuration message, where the second slice parameter configuration message includes the identification information of the slice #1, the fifth UE-Slice-MBR, and a second identifier of the terminal device, and the second identifier of the terminal device is determined by the NEF based on the first identifier of the terminal device.

With reference to the tenth aspect, in some implementations of the tenth aspect, the method further includes: the transceiver unit, further configured to send a third slice parameter configuration message to a fourth network element based on the first slice parameter configuration message, where the third slice parameter configuration message includes the identification information of the slice #1, the fifth UE-Slice-MBR, and the second identifier of the terminal device.

With reference to the tenth aspect, in some implementations of the tenth aspect, the transceiver unit is further configured to receive a second slice parameter configuration message response message from the third network element, where the second slice parameter configuration message response message indicates that a parameter of the slice #1 is successfully configured. The transceiver unit is further configured to send the third slice parameter configuration message to the fourth network element.

With reference to the tenth aspect, in some implementations of the tenth aspect, the method further includes: a processing unit, configured to determine that the AF has permission to invoke a slice parameter configuration service. The transceiver unit is further configured to send the second slice parameter configuration message to the third network element.

With reference to the tenth aspect, in some implementations of the tenth aspect, the method further includes: the transceiver unit, further configured to send the first identifier of the terminal device to a unified data management network element UDM. The transceiver unit is further configured to receive the second identifier of the terminal device from the UDM.

With reference to the tenth aspect, in some implementations of the tenth aspect, the method further includes: the transceiver unit, further configured to send the first identifier of the terminal device to a binding support function network element BSF and/or a policy control function network element PCF. The transceiver unit is further configured to receive the second identifier of the terminal device from the BSF and/or the PCF.

For explanations and beneficial effects of related content of the communication apparatus provided in the tenth aspect, refer to the method shown in the third aspect. Details are not described herein again.

According to an eleventh aspect, a communication apparatus is provided, including a unit configured to perform the method shown in the fourth aspect. The communication apparatus may be an application function network element AF, or may be performed by a chip or a circuit disposed in an application function network element AF. This is not limited in this application.

The communication apparatus includes:
a transceiver unit, configured to send first request information to a network exposure function network element NEF, where the first request information is used to provide a parameter of a network slice, the first request information includes identification information of a slice #1, a fifth per UE per slice-maximum bit rate UE-Slice-MBR, and identification information of a terminal device, the fifth UE-Slice-MBR is a subscribed fifth UE-Slice-MBR, and a network slice that the terminal device is allowed to access includes the slice #1. The transceiver unit is further configured to receive first request response information from the NEF, where the first request response information indicates that configuration of the parameter of the network slice accessed by the terminal device is completed.

For explanations and beneficial effects of related content of the communication apparatus provided in the eleventh aspect, refer to the method shown in the fourth aspect. Details are not described herein again.

According to a twelfth aspect, a communication apparatus is provided, including a unit configured to perform the method shown in the fifth aspect. The communication apparatus may be an access and mobility management function network element AMF, or may be performed by a chip or a circuit disposed in an access and mobility management function network element AMF. This is not limited in this application.

The communication apparatus includes:
a processing unit, configured to locally obtain a second UE-Slice-MBR, where the second UE-Slice-MBR is an authorized UE-Slice-MBR of a slice #1 of a terminal device; and a transceiver unit, configured to send a first request message to a session management network element SMF, where the first request message is used to establish a protocol data unit PDU session of the slice #1, and the first request message includes the second UE-Slice-MBR and identification information of the slice #1.

With reference to the twelfth aspect, in some implementations of the twelfth aspect, the transceiver unit is further configured to receive the second UE-Slice-MBR from a slice authentication, authorization, and accounting AAA server; and the processing unit is further configured to store the second UE-Slice-MBR.

With reference to the twelfth aspect, in some implementations of the twelfth aspect, the transceiver unit is further configured to receive the second UE-Slice-MBR from a first network element; and the processing unit is further configured to store the second UE-Slice-MBR.

With reference to the twelfth aspect, in some implementations of the twelfth aspect, the transceiver unit is further configured to receive a first per UE per slice-maximum bit rate UE-Slice-MBR of the slice #1 from the slice authentication, authorization, and accounting AAA server; the transceiver unit is further configured to send ueSliceMbr to the first network element, where the ueSliceMbr includes the first UE-Slice-MBR; and the transceiver unit is further configured to receive the second UE-Slice-MBR from the first network element, where the second UE-Slice-MBR is determined based on the first UE-Slice-MBR.

With reference to the twelfth aspect, in some implementations of the twelfth aspect, the transceiver unit is further configured to receive a second request message from the terminal device, where the second request message includes a PDU session establishment request message and an identifier of the slice #1; and the processing unit is further configured to locally obtain the second UE-Slice-MBR based on the identification information of the slice #1.

With reference to the twelfth aspect, in some implementations of the twelfth aspect, the transceiver unit is further configured to receive a third per UE per slice-maximum bit rate UE-Slice-MBR from a unified data management network element UDM, where the third UE-Slice-MBR is a subscribed UE-Slice-MBR of the slice #1.

With reference to the twelfth aspect, in some implementations of the twelfth aspect, the transceiver unit is further configured to send the second UE-Slice-MBR and the identification information of the slice #1 to an access network node.

For explanations and beneficial effects of related content of the communication apparatus provided in the twelfth aspect, refer to the method shown in the fifth aspect. Details are not described herein again.

According to a thirteenth aspect, a communication apparatus is provided, including a unit configured to perform the method shown in the sixth aspect. The communication apparatus may be a second network element, or may be a chip or a circuit disposed in a second network element. This is not limited in this application.

The communication apparatus includes:
a transceiver unit, configured to receive a session management policy control request from a session management function network element SMF, where the session management policy control request includes an identifier of a terminal device, identification information of a slice #1 of the terminal device, and a second UE-Slice-MBR, and the second UE-Slice-MBR is an authorized UE-Slice-MBR of the slice #1; and a processing unit, configured to monitor a data rate of the slice #1 based on the second UE-Slice-MBR.

With reference to the thirteenth aspect, in some implementations of the thirteenth aspect, the transceiver unit is further configured to send a third request message to a unified data repository network element UDR, where the third request message is used to obtain protocol data unit PDU session policy control information; and the transceiver unit is further configured to receive a subscribed UE-Slice-MBR from the UDR.

For explanations and beneficial effects of related content of the communication apparatus provided in the thirteenth aspect, refer to the method shown in the sixth aspect. Details are not described herein again.

According to a fourteenth aspect, a communication apparatus is provided. The apparatus includes: a memory, configured to store a program; and at least one processor, configured to execute the computer program or instructions stored in the memory, to perform the method according to any one of the possible implementations of the first aspect to the seventh aspect.

In an implementation, the apparatus is a first network element.

In another implementation, the apparatus is a chip, a chip system, or a circuit used in a first network element.

According to a fifteenth aspect, this application provides a processor, configured to perform the methods provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a sixteenth aspect, a computer-readable storage medium is provided. The computer-readable storage medium stores program code configured to be executed by a device, and the program code includes the method according to any one of the possible implementations of the first aspect to the seventh aspect.

According to a seventeenth aspect, a computer program product including instructions is provided. When the computer program product runs on a computer, the computer is enabled to perform the method according to any one of the possible implementations of the first aspect to the seventh aspect.

According to an eighteenth aspect, a chip is provided. The chip includes a processor and a communication interface. The processor reads, through the communication interface, instructions stored in a memory, to perform the method according to any one of the possible implementations of the first aspect to the seventh aspect.

Optionally, in an implementation, the chip further includes a memory. The memory stores a computer program or instructions, the processor is configured to execute the computer program or the instructions stored in the memory; and when the computer program or the instructions are executed, the processor is configured to perform the method according to any one of the possible implementations of the first aspect to the seventh aspect.

According to a nineteenth aspect, a communication system is provided, including one or more of the foregoing first network element, UDR, NEF, AF, AM F, and second network element.

### BRIEF DESCRIPTION OF DRAWINGS

FIG. 1 is a diagram of a network architecture to which an embodiment of this application is applicable;
FIG. 2 is a schematic flowchart of a communication method 200 according to an embodiment of this application;
FIG. 3 is a schematic flowchart of a communication method 300 according to an embodiment of this application;
FIG. 4 is a schematic flowchart of a communication method 400 according to an embodiment of this application;
FIG. 5 is a schematic flowchart of a communication method 500 according to an embodiment of this application;
FIG. 6 is a schematic flowchart of a communication method 600 according to an embodiment of this application;
FIG. 7 is a block diagram of a communication apparatus 700 according to an embodiment of this application;
FIG. 8 is a block diagram of another communication apparatus 800 according to an embodiment of this application; and
FIG. 9 is a diagram of a chip system 900 according to an embodiment of this application.

### DESCRIPTION OF EMBODIMENTS

The following describes technical solutions of embodiments in this application with reference to accompanying drawings.

The technical solutions provided in this application are applicable to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application are further applicable to a future communication system, for example, a 6th generation mobile communication system. The technical solutions provided in this application are further applicable to device-to-device (device-to-device, D2D) communication, vehicle-to-everything (vehicle-to-everything, V2X) communication, machine-to-machine (machine-to-machine, M2M) communication, machine-type communication (machine-type communication, MTC), an internet of things (internet of things, IoT) communication system, or another communication system.

First, a network architecture to which this application is applicable is briefly described.

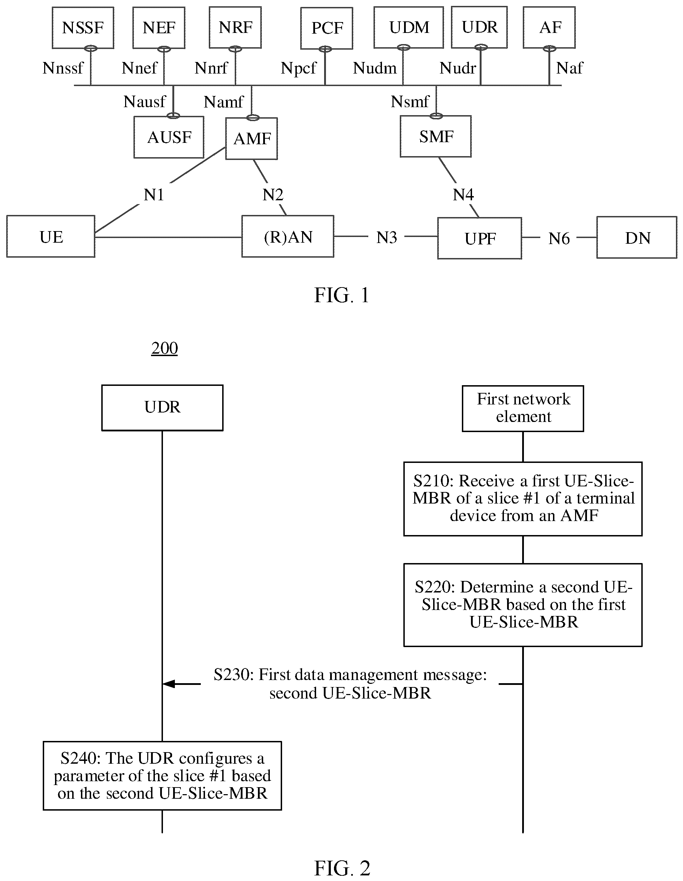

For example, FIG. 1 is a diagram of a network architecture.

As shown in FIG. 1, a 5G system (the 5th generation system, 5GS) is used as an example of the network architecture. The network architecture may include three parts, namely, a UE part, a data network (data network, DN) part, and an operator network part. The operator network may include one or more of the following network elements: a radio access network (radio access network, RAN) device or an access network (access network, AN) device, a user plane function (user plane function, UPF) network element, an authentication server function (authentication server function, AUSF) network element, a unified data repository (unified data repository, UDR) network element, an access and mobility management function (access and mobility management function, AMF) network element, an SMF network element, a network exposure function (network exposure function, NEF) network element, a network repository function (network repository function, NRF) network element, a policy control function (policy control function, PCF) network element, a unified data management (unified data management, UDM) network element, an application function (application function, AF) network element, and a network slice selection function (network slice selection function, NSSF) network element. In the foregoing operator network, a part other than the (R)AN part may be referred to as a core network part. In this application, user equipment, the (radio) access network device, the UPF network element, the AUSF network element, the UDR network element, the AMF network element, the SMF network element, the NEF network element, the NRF network element, the PCF network element, the UDM network element, and the AF network element are respectively referred to as UE, a (R)AN device, a UPF, an AUSF, a UDR, an AMF, an SMF, a NEF, an NRF, a PCF, a UDM, an AF, and an NSSF for short.

The following briefly describes each network element related in FIG. 1.

### 1. UE

The UE mainly accesses a 5G network through a wireless air interface, and obtains a service. The UE interacts with the (R)AN through the air interface, and interacts with the AMF in the core network by using non-access stratum (non-access stratum, NAS) signaling.

The UE in this embodiment of this application may also be referred to as a terminal device, a user, an access terminal, a subscriber unit, a subscriber station, a mobile station, a remote station, a remote terminal, a mobile device, a user terminal, a terminal, a wireless communication device, a user agent, or a user apparatus. The UE may be a cellular phone, a smartwatch, a wireless data card, a mobile phone, a tablet computer, a personal digital assistant (personal digital assistant, PDA) computer, a wireless modem, a handheld device, a laptop computer, a machine-type communication (machine-type communication, MTC) terminal, a computer with a wireless transceiver function, an internet of things terminal, a virtual reality terminal device, an augmented reality terminal device, a wearable device, a vehicle, a terminal in device-to-device (device-to-device, D2D) communication, a terminal in vehicle-to-everything (vehicle-to-everything, V2X) communication, a terminal in machine-type communication (machine-type communication, MTC), a terminal in the internet of things (internet of things, IOT), a terminal in smart office, a terminal in industrial control, a terminal in self driving, a terminal in remote surgery, a terminal in a smart grid, a terminal in transportation security, a terminal in a smart city, a terminal in a smart home, and a terminal in satellite communication (for example, a satellite phone or a satellite terminal). The UE may also be customer-premises equipment (customer-premises equipment, CPE), a telephone, a router, a network switch, a home gateway (residential gateway, RG), a set-top box, a fixed mobile convergence product, a home networking adapter, or an internet access gateway.

A specific technology used by the UE and a specific device form of the UE are not limited in this embodiment of this application.

### 2. (R)AN device

The (R)AN device may provide a function of accessing a communication network for an authorized user in a specific area. The RAN device is mainly a 3GPP network wireless network device, and the AN device may be an access network device defined in non-3GPP.

An access network may use different wireless access technologies. Currently, there are two types of wireless access technologies: a 3GPP access technology (for example, a wireless access technology used in a 3rd generation (3rd generation, 3G) system, a 4th generation (4th generation, 4G) system, or a 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB) or a RAN device. The non-3GPP access technology may include an air interface technology represented by an access point (access point, AP) in wireless fidelity (wireless fidelity, Wi-Fi), a worldwide interoperability for microwave access (worldwide interoperability for microwave access, WiMAX), a code division multiple access (code division multiple access, CDMA), and the like. The AN device may allow interconnection and interworking between a terminal device and a 3GPP core network by using a non-3GPP technology.

The (R)AN device can be responsible for functions such as radio resource management, quality of service (quality of service, QoS) management, data compression, and encryption on an air interface side. The AN device provides an access service for the terminal device, to complete forwarding of a control signal and user data between the terminal device and the core network.

For example, the (R)AN device may include but is not limited to: a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a base station (base station, BS) in WiMAX, a radio relay node, a radio backhaul node, a transmission point (transmission point, TP), or a transmission and reception point (transmission and reception point, TRP); or may be a gNB or a transmission point (TRP or TP) in a 5G (for example, NR) system, or one antenna panel or one group of antenna panels (including a plurality of antenna panels) of a base station in a 5G system; or may be a network node constituting a gNB or a transmission point, for example, a distributed unit (distributed unit, DU), or a base station in a next generation 6G communication system.

A specific technology used by the (R)AN device and a specific device form of the (R)AN device are not limited in this embodiment of this application.

### 3. UPF

The UPF mainly provides user plane functions such as forwarding and processing of a user packet, connection to a DN, session anchor, and quality of service (quality of service, QoS) policy enforcement. For example, the UPF may receive user plane data from the DN, and send the user plane data to the terminal device through the AN device. The UPF may alternatively receive user plane data from the terminal device through the AN device, and forward the user plane data to the DN.

### 4. DN

The DN is an operator network mainly used for providing a data service for the UE, for example, the internet (Internet), a third-party service network, or an IP multimedia service (IP multimedia service, IMS) network.

### 5. AUSF

The AUSF is mainly used for user authentication and the like.

### 6. UDR

The UDR mainly provides a capability of storing subscription data, policy data, and capability exposure data.

### 7. AMF

The AMF is mainly used for functions such as access control, mobility management, and attachment and detachment.

### 8. SMF

The SMF is mainly responsible for session management (such as session establishment, modification, and release), internet protocol (internet protocol, IP) address allocation and management, UPF selection and control, and the like.

### 9. NEF

The NEF is mainly used for securely exposing, to the outside, a service, a capability, and the like that are provided by a 3GPP network function.

### 10. NRF

The NRF is mainly used for storing a network function entity, description information of a service provided by the network function entity, and the like.

### 11. PCF

The PCF is mainly used for guiding a unified policy framework for network behavior, and providing policy rule information and the like for a control plane network element (for example, the AMF or the SMF).

It should be noted that, in this application, the PCF is further classified into an access and mobility management-policy control network element (Access and Mobility management-policy control function, AM-PCF) and a session management-policy control network element (Session Management-policy control function, SM-PCF). The AM-PCF is a PCF that provides access and mobility policy data for the UE, and the SM-PCF is a PCF that provides PDU session-related control policy information for the UE.

It should be noted that, in this embodiment of this application, the AM-PCF and the SM-PCF may be a same PCF, or may be different PCFs. In other words, the PCF that provides access and mobility policy data for a service and the PCF that provides PDU session-related policy information for the UE are a same PCF, or may be different PCFs. This is not limited in this application.

### 12. UDM

The UDM is mainly used for subscription data management of the UE, including storage and management of a UE identifier, access authorization of the UE, and the like.

### 13. AF

The AF is mainly used for providing a service for the 3GPP network, for example, interacting with the PCF to perform policy control.

### 14. NSSF

The NSSF is mainly used for a 5G slice service, for example, is responsible for selecting a target network slice instance (network slice instance, NSI).

Further, in this application, the communication system 100 may further include an authentication, authorization, and accounting (authentication, authorization, and accounting, AAA) server. The AAA server (server) may communicate with an AMF network element through an intermediate network element supporting communication between the AAA and the AMF network element. The intermediate network element may be an AUSF network element, a NEF network element, an NSSAAF network element, another network element used for an authentication and authorization procedure, or the like.

In the network architecture shown in FIG. 1, the network elements may communicate with each other through interfaces shown in the figure, and some interfaces may be implemented by using service-based interfaces. As shown in FIG. 1, the UE may communicate with the AMF through an N1 interface. The RAN may communicate with the AMF through an N2 interface. Relationships between other interfaces and network elements are shown in FIG. 1. For brevity, details are not described herein.

It should be understood that the network architecture shown above is merely an example for description, and a network architecture applicable to this embodiment of this application is not limited thereto. Any network architecture that can implement functions of the foregoing network elements is applicable to this embodiment of this application.

It should be further understood that functions or network elements such as the AMF, the SMF, the UPF, the PCF, the UDM, the AUSF, the UDR, the NEF, the NRF, the AF, and the NSSF shown in FIG. 1 may be understood as network elements configured to implement different functions. These network elements may be independent devices, may be integrated into a same device to implement different functions, may be network elements in a hardware device, may be software functions running on dedicated hardware, or may be virtualized functions instantiated on a platform (for example, a cloud platform). Specific forms of the foregoing network elements are not limited in this application.

It should be further understood that one or more services may be obtained through division into the network elements or the functions. Further, a service may exist independently of a network function. In this application, instances of the functions, instances of services included in the functions, or instances of services that exist independently of network functions may be referred to as service instances. In addition, during actual deployment, network elements with different functions may be co-located. For example, an access and mobility management network element may be co-located with a session management network element. The session management network element may be co-located with a user plane network element. When two network elements are co-located, interaction between the two network elements provided in embodiments of this application becomes an internal operation of the co-located network element or may be omitted.

It should be further understood that the foregoing names are defined merely for distinguishing between different functions, and should not constitute any limitation on this application. This application does not exclude a possibility of using other names in a 6G network and another future network. For example, in the 6G network, a part or all of the foregoing network elements may still use terms in 5G, or may use other names.

It should be further understood that names of interfaces between the foregoing network elements in FIG. 1 are only examples, and the interfaces may have other names during specific implementation. This is not specifically limited in this application. In addition, names of messages (or signaling) transmitted between the foregoing network elements are merely examples, and do not constitute any limitation on functions of the messages.

The following describes or introduces some technical terms or concepts in this application in a unified manner for ease of reading.
1. Network slice (network slice, NS):
   The network slice may also be referred to as a slice network, or may be referred to as a slice for short. Network slicing refers to customizing different logical networks on a physical or virtual network infrastructure based on service requirements of different services. The network slice may be a complete end-to-end network that includes UE, an access network, a transport network, a core network, and a service server, or may be a complete end-to-end network that includes only a core network but is assisted by UE, an access network, a transport network, and a service server, can provide a complete communication service, and has a network capability. The network slice may be a communication resource that ensures that a bearer service or a service can satisfy a service level agreement requirement, or may be considered as a combination of a network function and a communication resource that are required to complete a communication service or some communication services. One network slice may be identified using single network slice selection assistance information (single network slice selection assistance information, S-NSSAI).
2. Protocol data unit (protocol data unit, PDU) session (session):
   The protocol data unit session is an association that provides a PDU connectivity service between UE and a data network. In a communication system (for example, a 5G network or a 5G communication system), one PDU session may include one or more quality of service (quality of service, QoS) flows (flows). The QoS flow is a data transmission channel that satisfies a specific QoS quality requirement of the UE in the communication system (for example, in the 5G network or the 5G communication system), and may be identified using a QoS flow identity (QoS flow identity, QFI). On a UE side and a network side, one PDU session may include the following attribute information: a data network name (data network name, DNN), address information (such as an internet protocol (internet protocol, IP) address or a media access control (media access control, MAC) address), S-NSSAI, a service and session continuity (service and session continuity, SSC) mode, and the like. One PDU session is usually identified using a PDU session identifier, and the PDU session identifier may be allocated by the UE.
3. Per UE per slice-maximum bit rate (per UE per slice-maximum bit rate, UE-Slice-MBR):
   The UE-Slice-MBR is used to limit an aggregate bit rate expected to be provided across all guaranteed bit rate (guaranteed bit rate, GBR) and non-guaranteed bit rate (non-guaranteed bit rate, Non-GBR) quality of service (quality of service, QoS) flows corresponding to PDU sessions with active user planes of UE for a same slice. A RAN sets, based on the UE-Slice-MBR, a sum of session aggregate maximum bit rate values for all the PDU sessions with the active user planes established on the slice and a maximum flow bit rate value for each of the guaranteed bit rate QoS flows. For each slice, there may be one uplink value and one downlink value, which are respectively used to control bit rates of an uplink service and a downlink service on the slice.

Alternatively, a PCF network element may monitor a data rate of the slice by using the UE-Slice-MBR, that is, perform detection and monitoring by aggregating the session aggregate maximum bit rate values for all the PDU sessions established on the slice and a maximum bit rate value for each of guaranteed bit rate services.

It should be noted that the foregoing terms or technologies all belong to the conventional technology, and are not limited.

It may be understood that the term "and/or" in this specification describes only an association relationship between associated objects and indicates that three relationships may exist. For example, A and/or B may represent the following three cases: Only A exists, both A and B exist, and only B exists. In addition, the character "/" in this specification generally indicates an "or" relationship between the associated objects.

The foregoing briefly describes the terms related in this application, and details are not described in the following embodiments. The following describes in detail communication methods provided in embodiments of this application with reference to the accompanying drawings. Embodiments provided in this application are applicable to the network architecture shown in FIG. 1. This is not limited.

Based on the architecture shown in FIG. 1, a UE-Slice-MBR used to control maximum uplink and downlink data rates of each slice of each UE is stored in a UDM in a subscription manner. When a new slice is deployed or the slice is rented by a third party, update on subscription information of the UE needs to be initiated, and the subscription information is updated through the UDM. Consequently, the solution for obtaining the UE-Slice-MBR is not flexible, and user experience is poor.

This application provides a communication method, so that a UE-Slice-MBR can be more flexibly provided without exposing a network capability, to control use of a slice resource by UE, thereby improving user experience.

FIG. 2 is a diagram of a communication method 200 according to an embodiment of this application. The method 200 may include the following steps.

S210: A first network element receives a first UE-Slice-MBR of a slice #1 of a terminal device from an AMF.

Correspondingly, the AMF sends the first UE-Slice-MBR of the slice #1 of the terminal device to the first network element.

The first UE-Slice-MBR is provided by an AAA server.

Specifically, after receiving the first UE-Slice-MBR from the AAA server, the AMF sends the first UE-Slice-MBR to the first network element.

The first UE-Slice-MBR may include one uplink value and one downlink value, which are respectively used to control bit rates of an uplink service and a downlink service on the slice of the terminal device.

Optionally, the AMF may send, to an AM-PCF, the first UE-Slice-MBR that is from the AAA and that is carried in ueSliceMbr, or the AMF newly defines one attribute or one information element to carry the first UE-Slice-MBR.

Optionally, the first network element may be a policy control function network element, for example, the AM-PCF.

It should be noted that the slice #1 may be any slice in the terminal device, and the slice #1 may also be referred to as a first slice or another name. This is not limited in this application.

S220: The first network element determines a second UE-Slice-MBR based on the first UE-Slice-MBR.

The second UE-Slice-MBR is an authorized UE-Slice-MBR.

Specifically, after receiving the first UE-Slice-MBR, the first network element performs authorization check on the first UE-Slice-MBR, to determine whether the first UE-Slice-MBR is proper or whether the first UE-Slice-MBR needs to be modified. If the first UE-Slice-MBR is proper, the first UE-Slice-MBR is used as the authorized UE-Slice-MBR, that is, the second UE-Slice-MBR, of the slice #1.

That the first UE-Slice-MBR is proper may be understood as that a value of the first UE-Slice-MBR is within a normal range, or may be understood as that a value of the first UE-Slice-MBR is within a subscribed range or an allowed range. This is not limited in this application.

S230: The first network element sends a first data management message to a UDR.

Correspondingly, the UDR receives the first data management message from the first network element.

In a possible implementation, the first data management message is used to request to update a subscribed UE-Slice-MBR of the slice #1 in PDU session policy control information of UE.

For example, when the UDR stores the subscribed UE-Slice-MBR of the slice #1, the first data management message is used to request to update the subscribed UE-Slice-MBR of the slice #1 to the second UE-Slice-MBR. That is, an existing value is deleted, and the second UE-Slice-MBR is stored.

In a possible implementation, the first data management message is used to request to add the second UE-Slice-MBR to PDU session policy control information of UE.

For example, when the UDR stores a subscribed UE-Slice-MBR, the first data management message is used to request to add the authorized UE-Slice-MBR, that is, the second UE-Slice-MBR, to the PDU session policy control information. That is, the UDR stores both the subscribed UE-Slice-MBR and the authorized UE-Slice-MBR.

In a possible implementation, the first data management message is used to request to update an authorized UE-Slice-MBR of the slice #1 in PDU session policy control information of UE.

For example, when the UDR stores a subscribed UE-Slice-MBR and the authorized UE-Slice-MBR, the first data management message is used to request to update the authorized UE-Slice-MBR in the PDU session policy control information. That is, a value of the existing authorized UE-Slice-MBR is deleted, the second UE-Slice-MBR is stored, and a value of the second UE-Slice-MBR is used as the authorized UE-Slice-MBR.

Specifically, the first data management message further includes: a data set identifier and a data keyword.

The data set identifier indicates a data set in the UDR, and the data keyword indicates further data in the data set.

Optionally, the first data management message may further include at least one of a data subset identifier and a data subkeyword.

In a possible implementation, the first data management message specifically includes: a data set identifier, a data keyword, a data subkeyword, and data.

The data set identifier indicates policy data, the data keyword indicates the terminal device, the data subkeyword indicates the slice #1, and the second UE-Slice-MBR is used as the data.

In a possible implementation, the first data management message specifically includes: a data set identifier, a data keyword, a data subkeyword, a data subset identifier, and data.

The data set identifier indicates policy data, the data keyword indicates the terminal device, the data subkeyword indicates the slice #1 and a data network, the data subset identifier indicates the PDU session policy control data, and the second UE-Slice-MBR is used as the data.

In a possible implementation, the data management message specifically includes: a data set identifier, a data keyword, and data.

The data set identifier indicates policy data, the data keyword indicates the terminal device, and identification information of the slice #1 and the second UE-Slice-MBR are used as the data.

It should be noted that the first data management message is merely an example. This is not limited in this application.

Optionally, the first data management message may further include identification information of the slice #1.

Optionally, when determining that the terminal device is a non-roaming terminal device, the first network element performs S230, that is, the first network element sends the first data management message to the UDR.

Specifically, the AM-PCF determines, based on a network identifier included in an SUPI and a received identifier of a serving network, that the terminal device is the non-roaming terminal device. For example, if the network identifier included in the SUPI is the same as the received identifier of the serving network, it is determined that the terminal device is the non-roaming terminal device. This is not limited in this application.

S240: The UDR configures a parameter of the slice #1 based on the first data management message.

Specifically, the UDR stores the second UE-Slice-MBR in the parameter of the slice #1 in the PDU session policy control information of the slice #1.

In a possible implementation, when the UDR stores the subscribed UE-Slice-MBR, the UDR updates the subscribed UE-Slice-MBR to the second UE-Slice-MBR.

In a possible implementation, when the UDR stores the subscribed UE-Slice-MBR, the UDR adds the authorized UE-Slice-MBR, that is, the second UE-Slice-MBR, to the PDU session policy control information.

In a possible implementation, when the UDR stores the subscribed UE-Slice-MBR and the authorized UE-Slice-MBR, the UDR updates the authorized UE-Slice-MBR to the second UE-Slice-MBR.

It should be noted that the foregoing manner of configuring the parameter of the slice #1 in the PDU session policy control data is merely an example. This is not limited in this application.

Based on the foregoing solution, the first network element (PCF) that provides access and mobility policy information for the UE stores the UE-Slice-MBR from the AAA server in PDU session policy control subscription information of the UDR, or stores, in PDU session policy control subscription information of the UDR, the authorized UE-Slice-MBR determined based on the UE-Slice-MBR provided by the AAA server. Therefore, a PCF that serves a PDU session of the UE can obtain the UE-Slice-MBR provided by the AAA server or obtain the authorized UE-Slice-MBR determined based on the UE-Slice-MBR provided by the AAA server. In this way, when a RAN does not support control of the UE-Slice-MBR, the PCF can perform monitoring based on the UE-Slice-MBR. That is, when a network uses the PCF to control use of a slice resource by the terminal, this function can be supported.

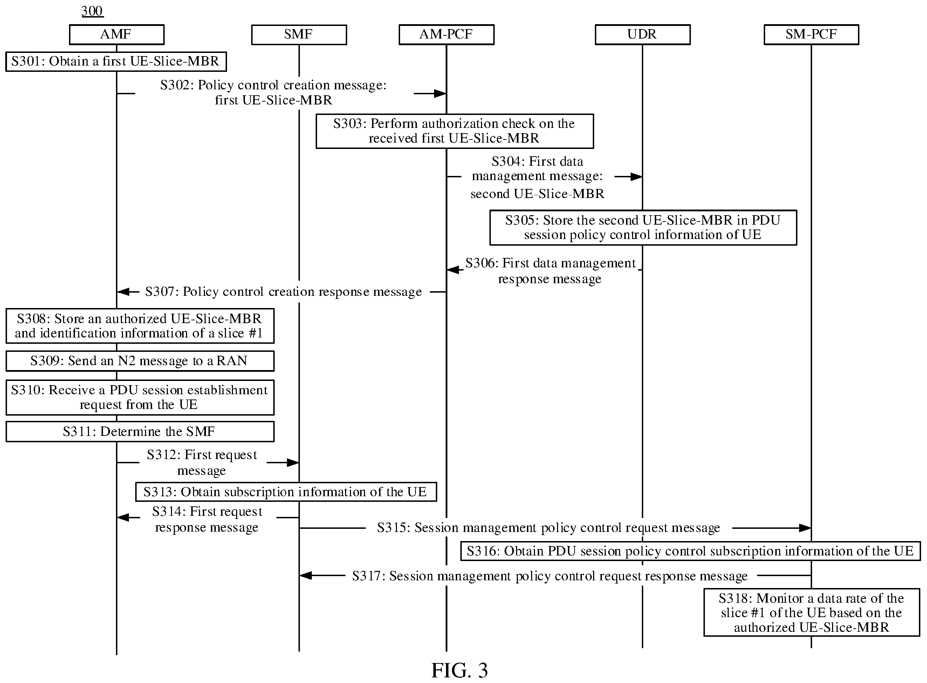

FIG. 3 is a diagram of a communication method 300 according to an embodiment of this application. For FIG. 3, refer to the foregoing description of FIG. 2. For ease of description, the first network element in FIG. 2 is referred to as an AM-PCF below, and the method 300 may include the following steps.

S301: An AMF obtains a first UE-Slice-MBR.

Specifically, in a slice authentication and/or authorization procedure of UE, the AMF receives the first UE-Slice-MBR of a slice #1 from an AAA.

Optionally, before S301, the AMF receives a subscribed UE-Slice-MBR of the slice #1 from a UDM.

S302: The AMF sends a policy control creation message to the AM-PCF.

Correspondingly, the AM-PCF receives the policy control creation message from the AMF.

Specifically, if the AMF receives the first UE-Slice-MBR from the AAA, regardless of whether the UE is in a roaming scenario or a non-roaming scenario, the AMF includes the first UE-Slice-MBR from the AAA and identification information of the slice #1 in the policy control creation message.

Optionally, the policy control creation message further includes identification information of a serving network.

For example, the AMF may send, to the AM-PCF, the first UE-Slice-MBR that is from the AAA and that is carried in ueSliceMbr, or the AMF newly defines one attribute or one information element to carry the first UE-Slice-MBR.

The AM-PCF is a PCF that provides access and mobility policy data for the UE, and the AM-PCF is configured to perform authorization check on a UE-Slice-MBR.

The identification information of the slice #1 may be single network slice selection assistance information (single network slice selection assistance information, S-NSSAI), and the S-NSSAI is used to identify the slice #1.

Specifically, the S-NSSAI may include a slice type or a service type, and may further include a slice differentiator. In the non-roaming scenario, the S-NSSAI is S-NSSAI of a home network. In the roaming scenario, the S-NSSAI is a mapped S-NSSAI (mapped S-NSSAI) of a roaming network from S-NSSAI of a home network. This is not limited in this application.

S303: The AM-PCF performs authorization check on the received first UE-Slice-MBR, and determines a second UE-Slice-MBR.

Specifically, after receiving the first UE-Slice-MBR, the AM-PCF determines, based on a policy (for example, a service level agreement or a roaming agreement) of the home network, whether a UE-Slice-MBR of the slice #1 is proper or needs to be modified.

That the first UE-Slice-MBR is proper may be understood as that a value of the first UE-Slice-MBR is within a normal range, or may be understood as that a value of the first UE-Slice-MBR is within a subscribed range or an allowed range. This is not limited in this application.

If the AM-PCF determines that the first UE-Slice-MBR is proper, the AM-PCF uses the first UE-Slice-MBR as an authorized UE-Slice-MBR, that is, the second UE-Slice-MBR, of the slice #1. Otherwise, the AM-PCF uses a locally stored UE-Slice-MBR as the authorized UE-Slice-MBR, that is, the second UE-Slice-MBR, of the slice #1. Alternatively, the AM-PCF determines the authorized UE-Slice-MBR, that is, the second UE-Slice-MBR, based on a locally stored UE-Slice-MBR range. For example, one uplink UE-Slice-MBR and one downlink UE-Slice-MBR are determined in the UE-Slice-MBR range, and the determined uplink UE-Slice-MBR and the determined downlink UE-Slice-MBR are used as the authorized UE-Slice-MBR. The uplink UE-Slice-MBR and the downlink UE-Slice-MBR may be the same or may be different. This is not limited in this application.

Further, after the AM-PCF determines the second UE-Slice-MBR, the method 300 further includes the following.

S304: The AM-PCF sends a first data management message to a UDR.

Correspondingly, the UDR receives the first data management message from the AM-PCF.

The first data management message includes the second UE-Slice-MBR.

Specifically, when the AM-PCF determines that the terminal device is a non-roaming terminal device, that is, in the non-roaming scenario, the AM-PCF sends the first data management message to the UDR based on a subscription permanent identifier (subscription permanent identifier, SUPI) in the policy control creation message received in S302.

Specifically, the AM-PCF determines, based on a network identifier included in the SUPI and a received identifier of the serving network, that the terminal device is the non-roaming terminal device. For example, if the network identifier included in the SUPI is the same as the received identifier of the serving network, it is determined that the terminal device is the non-roaming terminal device. This is not limited in this application.

In a possible implementation, the first data management message is used to request to update the subscribed UE-Slice-MBR of the slice #1 in PDU session policy control information of the UE.

For example, when the UDR stores the subscribed UE-Slice-MBR of the slice #1, the first data management message is used to request to update the subscribed UE-Slice-MBR of the slice #1 to the second UE-Slice-MBR. That is, an existing value is deleted, and the second UE-Slice-MBR is stored.

In a possible implementation, the first data management message is used to request to add the second UE-Slice-MBR to PDU session policy control information of the UE.

For example, when the UDR stores the subscribed UE-Slice-MBR, the first data management message is used to request to add the authorized UE-Slice-MBR, that is, the second UE-Slice-MBR, to the PDU session policy control information. That is, the UDR stores both the subscribed UE-Slice-MBR and the authorized UE-Slice-MBR.

In a possible implementation, the first data management message is used to request to update an authorized UE-Slice-MBR of the slice #1 in PDU session policy control information of the UE.

For example, when the UDR stores the subscribed UE-Slice-MBR and the authorized UE-Slice-MBR, the first data management message is used to request to update the authorized UE-Slice-MBR in the PDU session policy control information. That is, a value of the existing authorized UE-Slice-MBR is deleted, the second UE-Slice-MBR is stored, and a value of the second UE-Slice-MBR is used as the authorized UE-Slice-MBR.

Specifically, the first data management message further includes: a data set identifier and a data keyword.

The data set identifier indicates a data set in the UDR, and the data keyword indicates further data in the data set.

Optionally, the first data management message may further include at least one of a data subset identifier and a data subkeyword.

In a possible implementation, the first data management message specifically includes: a data set identifier, a data keyword, a data subkeyword, and data.

The data set identifier indicates policy data, the data keyword indicates the terminal device, the data subkeyword indicates the slice #1, and the second UE-Slice-MBR is used as the data.

That the data set identifier indicates policy data may be specifically the following: A data set identifier field is set as a policy data type to indicate the policy data, or a data set identifier field includes a policy data identifier to indicate the policy data. That the data keyword indicates the terminal device may be specifically the following: A data keyword field is set as an SUPI of the terminal device to indicate the terminal device, or a data keyword field includes an SUPI of the terminal device to indicate the terminal device. That the data subkey field indicates the slice #1 may be specifically the following: A data subkey field is set as the identification information of the slice #1 to indicate the slice #1, or a data subkey field includes the identification information of the slice #1 to indicate the slice #1.

In a possible implementation, the first data management message specifically includes: a data set identifier, a data keyword, a data subkeyword, a data subset identifier, and data.

The data set identifier indicates policy data, the data keyword indicates the terminal device, the data subkeyword indicates the slice #1 and a data network, the data subset identifier indicates the PDU session policy control data, and the second UE-Slice-MBR is used as the data.

That the data set identifier indicates policy data may be specifically the following: A data set identifier field is set as a policy data type to indicate the policy data, or a data set identifier field includes a policy data identifier to indicate the policy data. That the data keyword indicates the terminal device may be specifically the following: A data keyword field is set as an SUPI of the terminal device to indicate the terminal device, or a data keyword field includes an SUPI of the terminal device to indicate the terminal device. That the data subkeyword indicates the slice #1 and a data network may be specifically the following: A data subkey field is set as an identifier of the slice #1 and a data network name to indicate the slice #1 and the data network, or a data subkey field includes the identification information of the slice #1 and a data network name to indicate the slice #1 and the data network. That the data subset identifier indicates the PDU session policy control data may be specifically the following: A data subset identifier field is set as a PDU session policy control data type, or a data subset identifier field includes a PDU session policy control data identifier, to indicate the PDU session policy control data. Optionally, the first data management message may further include a data network name (data network name, DNN), the DNN is a wildcard character, and the DNN indicates all DNNs associated with the slice #1. It should be noted that the DNN is optional.

In a possible implementation, the first data management message specifically includes: a data set identifier, a data keyword, and data.

The data set identifier indicates policy data, the data keyword indicates the terminal device, and the identification information of the slice #1 and the second UE-Slice-MBR are used as the data.

That the data set identifier indicates policy data may be specifically the following: A data set identifier field is set as a policy data type to indicate the policy data, or a data set identifier field includes a policy data identifier to indicate the policy data. That the data keyword indicates the terminal device may be specifically the following: A data keyword field is set as an SUPI of the terminal device to indicate the terminal device, or a data keyword field includes an SUPI of the terminal device to indicate the terminal device.

It should be noted that the first data management message is merely an example. This is not limited in this application.

S305: The UDR stores the second UE-Slice-MBR in the PDU session policy control information of the UE.

Specifically, after receiving the first data management message, the UDR stores the second UE-Slice-MBR in the parameter of the slice #1 in the PDU session policy control information of the UE.

In a possible implementation, when the PDU session policy control data includes a value of an authorized UE-Slice-MBR of the slice #1, the UDR deletes the value of the authorized UE-Slice-MBR, and stores the second UE-Slice-MBR.

In a possible implementation, when the PDU session policy control data includes an authorized UE-Slice-MBR of the slice #1, the UDR updates the authorized UE-Slice-MBR to the second UE-Slice-MBR.

In a possible implementation, if a field of the subscribed UE-Slice-MBR corresponding to the slice #1 in the PDU session policy control data includes a value of a UE-Slice-MBR, the existing value is deleted, and the second UE-Slice-MBR is stored.

In a possible implementation, a field of the authorized UE-Slice-MBR of the slice #1 is added to the PDU session policy control data, and the second UE-Slice-MBR is stored in the field.

It should be noted that the storing the second UE-Slice-MBR may be specifically storing the second UE-Slice-MBR in the parameter of the slice #1 in the PDU session policy control data.

It should be noted that the foregoing manner of configuring the parameter of the slice #1 in the PDU session policy control data is merely an example. This is not limited in this application.

S306: The UDR sends a first data management response message to the AM-PCF.

Correspondingly, the AM-PCF receives the first data management response message from the UDR.

Specifically, after storing the second UE-Slice-MBR in the PDU session policy control information of the UE, the UDR sends the first data management response message to the AM-PCF.

The first data management response message indicates that storage of the second UE-Slice-MBR in the PDU session policy control information of the UE is completed.

S307: The AM-PCF sends a policy control creation response message to the AMF.

Correspondingly, the AMF receives the policy control creation response message from the AM-PCF.

The policy control creation response message includes the second UE-Slice-MBR and the identification information of the slice #1.

It should be noted that S307 may be performed at any time after S304.

S308: The AMF stores the authorized UE-Slice-MBR and the identification information of the slice #1.

Specifically, after receiving the policy control creation response message, the AMF stores the authorized UE-Slice-MBR and the identification information of the slice #1 that are in the policy control creation response message.

Optionally, if the AMF receives the subscribed UE-Slice-MBR of the slice #1 from the UDM, the AMF further stores the subscribed UE-Slice-MBR.

It should be noted that the second UE-Slice-MBR that is from the AM-PCF and that is stored in S308 may be the first UE-Slice-MBR directly sent by the AM-PCF, or may be the authorized UE-Slice-MBR (that is, the second UE-Slice-MBR) that is determined by the AM-PCF based on the first UE-Slice-MBR provided by the AAA in S301 and that is sent by the AM-PCF. This is not limited in this application.

S309: The AMF sends an N2 message to a RAN.

Correspondingly, the RAN receives the N2 message from the AMF.

The N2 message includes the second UE-Slice-MBR and the identification information of the slice #1.

Further, when the UE requests to establish a PDU session, the method 300 may further include the following.

S310: The UE sends a PDU session establishment request to the AMF.

Correspondingly, the AMF receives the PDU session establishment request from the UE.

Specifically, the UE sends a non-access stratum (non-access stratum, NAS) message to the AMF. The NAS message includes the PDU session establishment request. Optionally, the NAS message includes the identification information of the slice #1.

It should be noted that, if the NAS message does not include the identifier of the slice #1, the AMF determines the identification information of the slice #1 based on the NAS message, for example, determines the identifier of the slice #1 based on subscription information from the UDM.

S311: The AMF determines an SMF.

Specifically, after receiving the PDU session establishment request from the UE, the AMF selects, for the UE, the SMF serving the PDU session.

S312: The AMF sends a first request message to the SMF.

Correspondingly, the SMF receives the first request message from the AMF.

Specifically, the first request message may be an Nsmf_PDUsession_CreateSMContext request message.

The first request message is used to request to establish the PDU session.

Specifically, the first request message includes the identification information of the slice #1.

S313: The SMF obtains the subscription information of the UE.

Specifically, after receiving the first request message, the SMF obtains the subscription information of the UE, and establishes the PDU session for the UE.

S314: The SMF sends a first request response message to the AMF.

Correspondingly, the AMF receives the first request response message from the SMF.

The first request response message indicates that the PDU session establishment request is received.

S315: The SMF sends a session management policy control request message to an SM-PCF.

Correspondingly, the SM-PCF receives the session management policy control request message from the SMF.

The SM-PCF is a PCF that provides PDU session-related control policy information for the UE.

The session management policy control request message is used to obtain a related parameter of the PDU session.

Specifically, the session management policy control request message includes identification information of the UE and the identification information of the slice #1.

S316: The SM-PCF obtains PDU session policy control subscription information of the UE.

Specifically, after receiving a session management policy control request, the SM-PCF interacts with the UDR to obtain the PDU session policy control subscription information of the UE. The PDU session policy control subscription information includes a UE-Slice-MBR.

Specifically, the UDR may include the subscribed UE-Slice-MBR from the UDM and/or the authorized UE-Slice-MBR from the AM-PCF. When the PDU session policy control subscription information includes both the subscribed UE-Slice-MBR and the authorized UE-Slice-MBR, the SM-PCF preferentially uses the authorized UE-Slice-MBR. Alternatively, when the PDU session policy control subscription information includes only the subscribed UE-Slice-MBR directly from the AM-PCF, the SM-PCF updates the subscribed UE-Slice-MBR to the second UE-Slice-MBR determined based on the first UE-Slice-MBR from the AAA for use.

It should be noted that the foregoing manner in which the SM-PCF obtains and uses the UE-Slice-MBR is merely an example. This is not limited in this application. When the UDR stores only the subscribed UE-Slice-MBR (which may include an uplink value and a downlink value), the UE-Slice-MBR is used as the subscribed UE-Slice-MBR only as an example. This is not limited in this application.

S317: The SM-PCF sends a session management policy control request response message to the SMF.

Correspondingly, the SMF receives the session management policy control request response message from the SM-PCF.

S318: The SM-PCF monitors a data rate of the slice #1 of the UE based on the authorized UE-Slice-MBR.

Specifically, after establishing a session management policy, the SM-PCF monitors the data rate of the slice #1 of the UE based on the authorized UE-slice-MB.

Specifically, a process in which the SM-PCF monitors the data rate of the slice #1 of the UE based on the authorized UE-slice-MB is as follows:
The SM-PCF performs monitoring by aggregating Session-AMBR values allocated in all PDU sessions established for the UE in the S-NSSAI and an MBR value (belonging to a GBR service data flow). For example, when the SM-PCF detects that the data rate of the S-NSSAI reaches a specific percentage of the UE-Slice-MBR of the S-NSSAI, the SM-PCF may apply a policy decision to strengthen a traffic limit for a single PDU session or PCC rule (for example, change the Session-AMBR value (if allowed by an HPLMN) or update a PCC rule to change QoS or a charging keyword) and interact with the SMF accordingly. When a data rate of each piece of S-NSSAI of the UE is lower than a percentage of the UE-Slice-MBR, the SM-PCF may relax a traffic limit for a single PDU session or PCC rule.

It should be noted that a manner in which the SM-PCF monitors the data rate of the slice #1 of the UE based on the authorized UE-Slice-MBR is merely an example. This is not limited in this application.

Based on the foregoing solution, the PCF that provides the access and mobility policy information for the UE stores the UE-Slice-MBR in the PDU session policy control subscription information of the UDR based on the UE-Slice-MBR from the AAA, so that the PCF that serves the PDU session of the UE can obtain the UE-Slice-MBR provided by the AAA. In this way, when the RAN does not support control of the UE-Slice-MBR, the PCF can perform monitoring based on the UE-Slice-MBR. That is, when a network uses the PCF to control use of a slice resource by the terminal, this function can be supported.

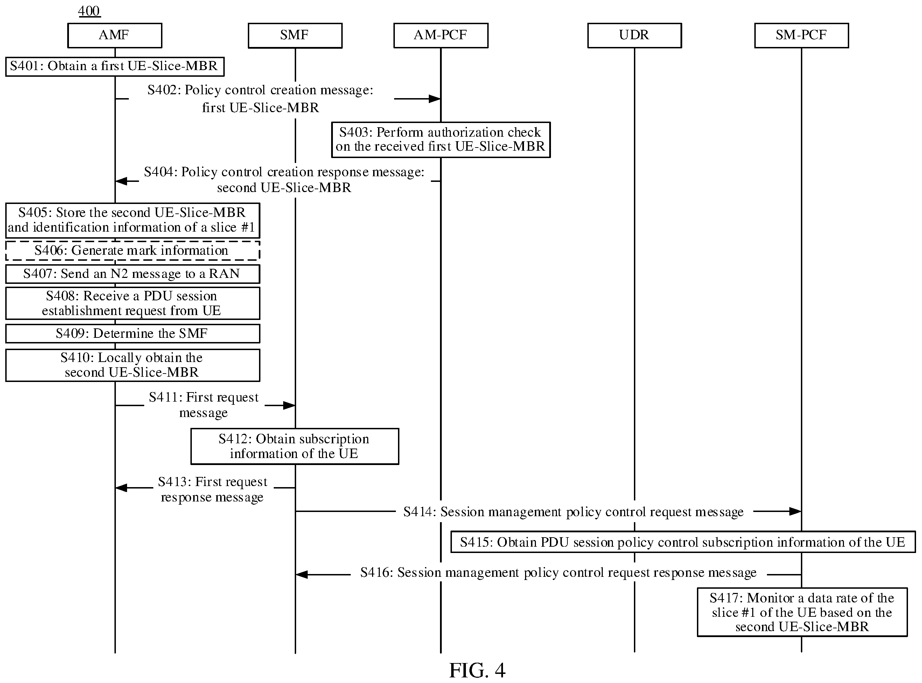

FIG. 4 is a diagram of a communication method 400 according to an embodiment of this application. The method 400 may include the following steps.

S401: An AMF obtains a first UE-Slice-MBR.

Specifically, in a slice authentication and/or authorization procedure of UE, the AMF receives the first UE-Slice-MBR of a slice #1 from an AAA, and the AMF locally stores the first UE-Slice-MBR.

Optionally, before S401, the AMF receives a subscribed UE-Slice-MBR from a UDM.

S402: The AMF sends a policy control creation message to a first network element.

Correspondingly, the first network element receives the policy control creation message from the AMF.

The first network element is an AM-PCF. It should be noted that, for ease of description, the first network element is referred to as the AM-PCF in the following solution of the method 400.

Specifically, if the AMF receives the first UE-Slice-MBR from the AAA, regardless of whether the UE is in a roaming scenario or a non-roaming scenario, the AMF includes the first UE-Slice-MBR from the AAA and identification information of the slice #1 in the policy control creation message.

It should be noted that a process of S402 is similar to a process of S302. To avoid repetition, detailed descriptions thereof are omitted herein.

S403: The AM-PCF performs authorization check on the received first UE-Slice-MBR, and determines a second UE-Slice-MBR.

It should be noted that a process of S403 is similar to a process of S303. To avoid repetition, detailed descriptions thereof are omitted herein.

Further, after the AM-PCF determines the second UE-Slice-MBR, the method 400 further includes the following.

S404: The AM-PCF sends a policy control creation response message to the AMF.

Correspondingly, the AMF receives the policy control creation response message from the AM-PCF.

The policy control creation response message includes the second UE-Slice-MBR and the identification information of the slice #1.

S405: The AMF stores the second UE-Slice-MBR and the identification information of the slice #1.

Specifically, after receiving the AM policy control creation response message, the AMF stores the second UE-Slice-MBR and the identification information of the slice #1 that are in the policy control creation response message.

It should be noted that, in this case, the AMF may store a plurality of UE-Slice-MBRs.

In a possible implementation, the AMF stores the first UE-Slice-MBR from the AAA server in S401.

In a possible implementation, the AMF stores an authorized UE-Slice-MBR from the AM-PCF.

In a possible implementation, the AMF stores the second UE-Slice-MBR that is from the AM-PCF and that is determined based on the first UE-Slice-MBR in S404.

It should be noted that the UE-Slice-MBR stored in the AMF is not limited in this application.

Optionally, in S406, the AMF generates mark information.

Specifically, after storing the second UE-Slice-MBR and the identification information of the slice #1, the AMF may generate the mark information, and store the mark information in association with the second UE-Slice-MBR.

The mark information is used by the AMF to subsequently determine that the second UE-Slice-MBR is included in a message.

S407: The AMF sends an N2 message to a RAN.

Correspondingly, the RAN receives the N2 message from the AMF.

The N2 message includes the second UE-Slice-MBR and the identification information of the slice #1.

Further, when the UE requests to establish a PDU session, the method 400 may further include the following.

S408: The UE sends a PDU session establishment request to the AMF.

Correspondingly, the AMF receives the PDU session establishment request from the UE.

Specifically, the UE sends a non-access stratum (non-access stratum, NAS) message to the AMF. The NAS message includes the PDU session establishment request and the identification information of the slice #1.

S409: The AMF determines an SMF.

Specifically, after receiving the PDU session establishment request from the UE, the AMF selects, for the UE, the SMF serving the PDU session.

S410: The AMF locally obtains the second UE-Slice-MBR.

Specifically, after determining, for the UE, to select the SMF for establishing the PDU session, the AMF determines, based on the identification information of the slice #1, one UE-Slice-MBR from the plurality of locally stored UE-Slice-MBRs to monitor a data rate of the slice #1.

It should be noted that, when the authorized UE-Slice-MBR and the subscribed UE-Slice-MBR are locally stored, the AMF preferentially selects the authorized UE-Slice-MBR (that is, the second UE-Slice-MBR) to monitor the data rate of the slice #1.

It should be noted that the AMF may further select another locally stored UE-Slice-MBR to monitor the data rate of the slice #1. This is not limited in this application.

It should be understood that, in this embodiment, that the AMF selects the second UE-Slice-MBR to monitor the data rate of the slice #1 is used as a preferred solution for description, and the second UE-Slice-MBR is used as an example for description in subsequent embodiments.

Optionally, when the mark information is generated in S406, the AMF locally obtains the second UE-Slice-MBR based on the identification information of the slice #1 and the mark information in S406.

Optionally, if PDU session information of the slice #1 is not locally stored, the AMF locally obtains the second UE-Slice-MBR based on the identification information of the slice #1.

S411: The AMF sends a first request message to the SMF.

Correspondingly, the SMF receives the first request message from the AMF.

It should be understood that, after determining the UE-Slice-MBR (namely, the second UE-Slice-MBR) used to monitor the data rate of the slice #1, the AMF sends, to the SMF, the second UE-Slice-MBR carried in the first request message.

Specifically, the first request message may be an Nsmf_PDUsession_CreateSMContext request message.

The first request message is used to request to establish the PDU session.

Specifically, the first request message includes the identification information of the slice #1 and the second UE-Slice-MBR.

S412: The SMF obtains subscription information of the UE.

Specifically, after receiving the first request message, the SMF obtains the subscription information of the UE, and establishes the PDU session for the UE.

S413: The SMF sends a first request response message to the AMF.

Correspondingly, the AMF receives the first request response information from the SMF.

The first request response information indicates that the PDU session establishment request is received.

S414: The SMF sends a session management policy control request message to a second network element.

Correspondingly, the second network element receives the session management policy control request message from the SMF.

The second network element is an SM-PCF. It should be noted that, for ease of description, the second network element is referred to as the SM-PCF in the following solution of the method 400.

The SM-PCF is a PCF that provides PDU session-related control policy information for the UE.

The session management policy control request is used to obtain a related parameter of the PDU session.

Specifically, the session management policy control request includes identification information of the UE, the identification information of the slice #1, and the second UE-Slice-MBR.

S415: The SM-PCF obtains PDU session policy control subscription information of the UE.

Specifically, after receiving the session management policy control request, the SM-PCF interacts with a UDR to obtain the PDU session policy control subscription information of the UE. The PDU session policy control subscription information includes a UE-Slice-MBR.

Specifically, the UDR may include the subscribed UE-Slice-MBR from the UDM and/or the authorized UE-Slice-MBR from the AM-PCF.

It should be noted that the foregoing manner in which the SM-PCF obtains the PDU session policy control subscription information of the UE is merely an example. This is not limited in this application.

S416: The SM-PCF sends a session management policy control request response message to the SMF.

Correspondingly, the SMF receives the session management policy control request response message from the SM-PCF.

S417: The SM-PCF monitors the data rate of the slice #1 of the UE based on the second UE-slice-MB.

Specifically, after establishing a session management policy association, the SM-PCF monitors the data rate of the slice #1 of the UE based on the second UE-slice-MB.

It should be noted that, when the PDU session policy control subscription information includes both the subscribed UE-Slice-MBR and the authorized UE-Slice-MBR, the SM-PCF preferentially uses the authorized UE-Slice-MBR. Alternatively, when the PDU session policy control subscription information includes only the authorized UE-Slice-MBR directly from the AM-PCF, the UDR updates the authorized UE-Slice-MBR to the second UE-Slice-MBR determined based on the first UE-Slice-MBR from the AAA, and further, the SM-PCF monitors the data rate of the slice #1 of the UE by using the second UE-Slice-MBR. Alternatively, when the PDU session policy control subscription information includes only the subscribed UE-Slice-MBR, the UDR updates the subscribed UE-Slice-MBR to the second UE-Slice-MBR determined based on the first UE-Slice-MBR from the AAA, and further, the SM-PCF monitors the data rate of the slice #1 of the UE by using the second UE-Slice-MBR.

It should be noted that, if the AMF provides the second UE-Slice-MBR only in a first PDU session establishment procedure of the slice #1, when a subsequent PDU session is established on the slice #1, the SM-PCF associates another session by using an identifier of the slice #1, and controls the PDU session by using the second UE-Slice-MBR. The second UE-Slice-MBR is deleted only after all sessions associated with the slice #1 are deleted. When the AMF receives a newly authorized UE-Slice-MBR, if there are a plurality of PDU sessions on the slice #1, the AMF selects any PDU session to report the updated UE-Slice-MBR.

It should be noted that, if the AMF provides the second UE-Slice-MBR in each PDU session establishment procedure of the slice #1, the SM-PCF updates the local UE-Slice-MBR only when determining that a newly received value is different from an existing value. When the AMF receives a newly authorized UE-Slice-MBR, if there are a plurality of PDU sessions on the slice #1, the AMF selects any PDU session to report the updated UE-Slice-MBR.

It should be noted that, for the solution of the method 400, if information about the UE-Slice-MBR is replaced with an instance ID of the AM-PCF, the AM-PCF provides session policy control for all PDU session services associated with the slice #1, that is, the AM-PCF and the SM-PCF are the same, so that the SM-PCF directly obtains the UE-Slice-MBR that is determined in S403 and that is used to monitor the data rate of the slice #1.

It should be noted that, for the solution of the method 400, if the AMF determines that steps S402 and S403 do not need to be performed, the AMF directly uses the first UE-Slice-MBR as the authorized UE-slice-MBR, that is, the second UE-Slice-MBR, and provides the first UE-Slice-MBR to the SM-PCF, so that the SM-PCF detects a data rate of a slice of a terminal device based on the second UE-Slice-MBR. The first UE-Slice-MBR may be directly used or a new value is determined for use. If the SM-PCF receives the subscribed UE-Slice-MBR from the UDR, the SM-PCF preferentially uses the second UE-Slice-MBR from the SMF.

Based on the foregoing solution, the AMF provides, in a PDU session establishment process, the authorized UE-Slice-MBR determined based on the UE-Slice-MBR from the AAA, so that the SM-PCF obtains the UE-Slice-MBR provided by the AAA. In this way, when the RAN does not support control of the UE-Slice-MBR, the PCF can monitor the data rate of the slice of the terminal device based on the UE-Slice-MBR.

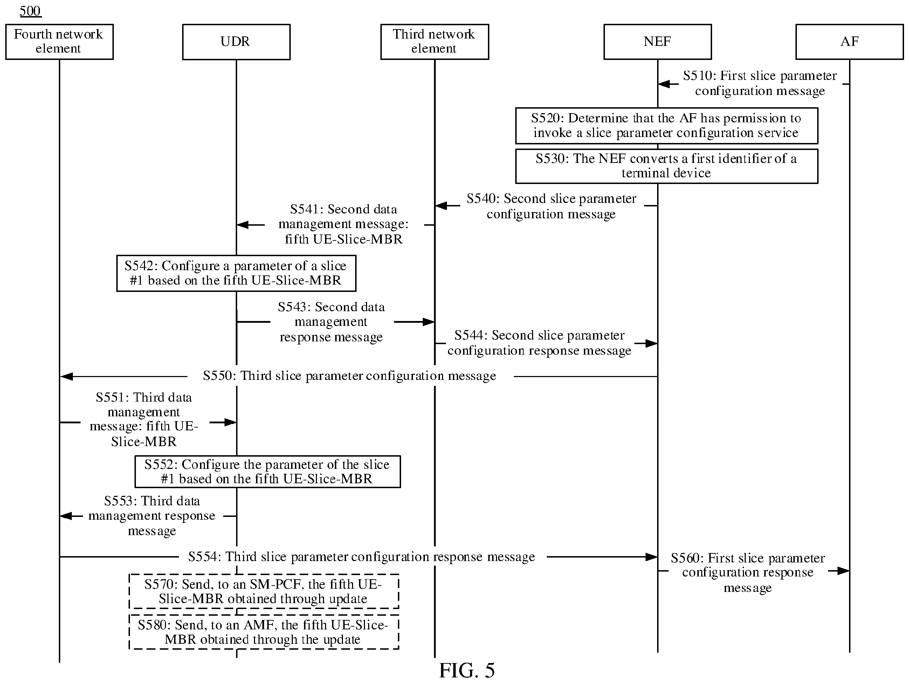

FIG. 5 is a diagram of a communication method 500 according to an embodiment of this application. The method 500 may include the following steps.

S510: An AF sends a first slice parameter configuration message to a NEF.

Correspondingly, the NEF receives the first slice parameter configuration message from the AF.

The first slice parameter configuration message is used to request to configure a related parameter of a slice.

Specifically, the first slice parameter configuration message includes the following information:
identification information of a slice #1 of a terminal device, a fifth UE-Slice-MBR, and a first identifier of the terminal device.

The fifth UE-Slice-MBR is an authorized UE-Slice-MBR, which may be understood as a UE-Slice-MBR authorized by the AF.

The first identifier of the terminal device may be an external identifier, for example, a generic public subscription identifier (generic public subscription identifier, GPSI), an IP address, or a media access control (media access control, MAC) address. This is not limited in this application.

Optionally, the first slice parameter configuration message may further include identification information of the AF.

S520: The NEF determines that the AF has permission to invoke a slice parameter configuration service.

Specifically, the NEF determines, based on a local policy, whether the AF has the permission to invoke the slice parameter configuration service.

Further, when the NEF determines that the AF has the permission to invoke the slice parameter configuration service, the method 500 may further include the following.

S530: The NEF converts the first identifier of the terminal device.

For example, if the first identifier is the GPSI, the NEF interacts with a UDM to obtain an SUPI of UE.

Specifically, the NEF sends the first identifier (GPSI) to the UDM, and the UDM determines a second identifier (SUPI) based on the first identifier, and further sends the second identifier (SUPI) to the NEF.

For example, if identification information of the UE is an IP address or a MAC address, the NEF interacts with a binding support function (binding support function, BSF) and/or a PCF to obtain the SUPI of the UE.

Specifically, the NEF sends the first identifier (the IP address or the MAC address) to the BSF and/or the PCF, and the BSF and/or the PCF determine/determines the second identifier (SUPI) based on the first identifier. Further, the BSF and/or the PCF send/sends the second identifier (SUPI) to the NEF.

Further, after converting the first identifier of the terminal device, the NEF separately performs S540 to S544 and S550 to S554. It should be noted that a sequence of performing S540 to S544 and S550 to S554 by the NEF is not limited in this application. For example, S540 to S544 and S550 to S554 may be simultaneously performed, or S550 to S554 are performed after S540 to S544 are performed.

S540: The NEF sends a second slice parameter configuration message to a third network element.

Correspondingly, the third network element receives the second slice parameter configuration message from the NEF.

The third network element may be the UDM. It should be noted that, for ease of description, the third network element is referred to as the UDM in the following solution of the method 500.

The second slice parameter configuration message is used to request to configure a related parameter of the slice #1.

Specifically, the second slice parameter configuration message includes the identification information of the slice #1, the fifth UE-Slice-MBR, and the second identifier of the terminal device.

S541: The UDM sends a second data management message to a UDR.

Correspondingly, the UDR receives the second data management message from the UDM.

The second data management message is used to request to configure access and mobility subscription data.

The second data management message includes the fifth UE-Slice-MBR.

Specifically, the second data management message further includes: a data set identifier and a data keyword.

The data set identifier indicates a data set in the UDR, and the data keyword indicates further data in the data set.

Optionally, the second data management message may further include at least one of a data subset identifier and a data subkeyword.

In a possible implementation, the second data management message specifically includes: a data set identifier, a data keyword, a data subkeyword, and data.

The data set identifier indicates subscription data, the data keyword indicates the terminal device, and the data subkeyword indicates the slice #1. The fifth UE-Slice-MBR is used as the data.

That the data set identifier indicates subscription data may be specifically the following: A data set identifier field is set as a subscription data type to indicate the subscription data, or a data set identifier field includes a subscription data identifier to indicate the subscription data. That the data keyword indicates the terminal device may be specifically the following: A data keyword field is set as an SUPI of the terminal device to indicate the terminal device, or a data keyword field includes an SUPI of the terminal device to indicate the terminal device. That the data subkey field indicates the slice #1 may be specifically the following: A data subkey field is set as the identification information of the slice #1 to indicate the slice #1, or a data subkey field includes the identification information of the slice #1 to indicate the slice #1.

In a possible implementation, the second data management message specifically includes: a data set identifier, a data keyword, a data subkeyword, a data subset identifier, and data.

The data set identifier indicates subscription data, the data keyword indicates the terminal device, the data subset identifier indicates the access and mobility subscription data, and the data subkeyword indicates the slice #1. The fifth UE-Slice-MBR is used as the data.

That the data set identifier indicates subscription data may be specifically the following: A data set identifier field is set as a subscription data type to indicate the subscription data, or a data set identifier field includes a subscription data identifier to indicate the subscription data. That the data keyword indicates the terminal device may be specifically the following: A data keyword field is set as an SUPI of the terminal device to indicate the terminal device, or a data keyword field includes an SUPI of the terminal device to indicate the terminal device. That the data subset identifier indicates the access and mobility subscription data may be specifically the following: A data subset identifier field is set as an access and mobility subscription data type, or a data subset identifier field includes an access and mobility subscription data identifier to indicate the access and mobility subscription data. That the data subkey field indicates the slice #1 may be specifically the following: A data subkey field is set as the identification information of the slice #1 to indicate the slice #1, or a data subkey field includes the identification information of the slice #1 to indicate the slice #1.

In a possible implementation, the second data management message specifically includes: a data set identifier, a data keyword, and data.

The data set identifier indicates subscription data, the data keyword indicates the terminal device, and the identification information of the slice #1 and the fifth UE-Slice-MBR are used as the data.

That the data set identifier indicates subscription data may be specifically the following: A data set identifier field is set as a subscription data type to indicate the subscription data, or a data set identifier field includes a subscription data identifier to indicate the subscription data. That the data keyword indicates the terminal device may be specifically the following: A data keyword field is set as an SUPI of the terminal device to indicate the terminal device, or a data keyword field includes an SUPI of the terminal device to indicate the terminal device.

It should be noted that the second data management message is merely an example. This is not limited in this application.

S542: The UDR configures a parameter of the slice #1 based on the second data management message.

Specifically, after receiving the second data management message, the UDR configures the parameter of the slice #1 in the access and mobility subscription data of the slice #1.

In a possible implementation, when the access and mobility subscription data includes a value of the authorized UE-Slice-MBR of the slice #1, the UDR deletes the value of the authorized UE-Slice-MBR, and stores the fifth UE-Slice-MBR.

In a possible implementation, when the access and mobility subscription data includes a value of the authorized UE-Slice-MBR of the slice #1, the UDR updates the authorized UE-Slice-MBR to the fifth UE-Slice-MBR.

In a possible implementation, if a field of a subscribed UE-Slice-MBR corresponding to the slice #1 in the access and mobility subscription data includes a value of a UE-Slice-MBR, the existing value is deleted, and the fifth UE-Slice-MBR is stored.

In a possible implementation, a field of the authorized UE-Slice-MBR of the slice #1 is added to the access and mobility subscription data, and the fifth UE-Slice-MBR is stored in the field.

It should be noted that the storing the fifth UE-Slice-MBR may be specifically storing the fifth UE-Slice-MBR in the parameter of the slice #1 in the access and mobility subscription data.

It should be noted that the foregoing manner of configuring the parameter of the slice #1 in the access and mobility subscription data of the slice #1 is merely an example. This is not limited in this application.

S543: The UDR sends a second data management response message to the UDM.

Correspondingly, the UDM receives the second data management response message from the UDR.

The second data management response message indicates that the fifth UE-Slice-MBR is successfully configured.

S544: The UDM sends a second slice parameter configuration response message to the NEF.

Correspondingly, the NEF receives the second slice parameter configuration response message from the UDM.

The second slice parameter configuration response message indicates that the parameter of the slice #1 is successfully configured.

S550: The NEF sends a third slice parameter configuration message to a fourth network element.

Correspondingly, the fourth network element receives the third slice parameter configuration message from the NEF.

The fourth network element may be a PCF. It should be noted that, for ease of description, the fourth network element is referred to as the PCF in the following solution of the method 500.

The third slice parameter configuration message is used to request to configure a related parameter of the slice #1.

Specifically, the third slice parameter configuration message includes the identification information of the slice #1, the fifth UE-Slice-MBR, and the second identifier of the terminal device.

Optionally, the NEF may perform this step after receiving S544.

S551: The PCF sends a third data management message to the UDR.

Correspondingly, the UDR receives the third data management message from the PCF.

The third data management message is used to request to configure PDU session policy control data.

The third data management message includes the fifth UE-Slice-MBR.

Specifically, the third data management message further includes: a data set identifier and a data keyword.

The data set identifier indicates a data set in the UDR, and the data keyword indicates further data in the data set.

Optionally, the third data management message may further include at least one of a data subset identifier and a data subkeyword.

In a possible implementation, the third data management message specifically includes: a data set identifier, a data keyword, a data subkeyword, and data.

The data set identifier indicates policy data, the data keyword indicates the terminal device, and the data subkeyword indicates the slice #1. The fifth UE-Slice-MBR is used as the data.

That the data set identifier indicates policy data may be specifically the following: A data set identifier field is set as a policy data type to indicate the policy data, or a data set identifier field includes a policy data identifier to indicate the policy data. That the data keyword indicates the terminal device may be specifically the following: A data keyword field is set as an SUPI of the terminal device to indicate the terminal device, or a data keyword field includes an SUPI of the terminal device to indicate the terminal device. That the data subkey field indicates the slice #1 may be specifically the following: A data subkey field is set as the identification information of the slice #1 to indicate the slice #1, or a data subkey field includes the identification information of the slice #1 to indicate the slice #1.

In a possible implementation, the third data management message specifically includes: a data set identifier, a data keyword, a data subkeyword, a data subset identifier, and data.

The data set identifier indicates policy data, the data keyword indicates the terminal device, the data subset identifier indicates the PDU session policy control data, and the data subkeyword indicates the slice #1. The fifth UE-Slice-MBR is used as the data.

That the data set identifier indicates policy data may be specifically the following: A data set identifier field is set as a policy data type to indicate the policy data, or a data set identifier field includes a policy data identifier to indicate the policy data. That the data keyword indicates the terminal device may be specifically the following: A data keyword field is set as an SUPI of the terminal device to indicate the terminal device, or a data keyword field includes an SUPI of the terminal device to indicate the terminal device. That the data subset identifier indicates the PDU session policy control data may be specifically the following: A data subset identifier field is set as a PDU session policy control data type, or a data subset identifier field includes a PDU session policy control data identifier, to indicate the PDU session policy control data. That the data subkey field indicates the slice #1 may be specifically the following: A data subkey field is set as the identification information of the slice #1 to indicate the slice #1, or a data subkey field includes the identification information of the slice #1 to indicate the slice #1.

In a possible implementation, the second data management message specifically includes: a data set identifier, a data keyword, and data.

The data set identifier indicates policy data, the data keyword indicates the terminal device, and the identification information of the slice #1 and the fifth UE-Slice-MBR are used as the data.

That the data set identifier indicates policy data may be specifically the following: A data set identifier field is set as a policy data type to indicate the policy data, or a data set identifier field includes a policy data identifier to indicate the policy data. That the data keyword indicates the terminal device may be specifically the following: A data keyword field is set as an SUPI of the terminal device to indicate the terminal device, or a data keyword field includes an SUPI of the terminal device to indicate the terminal device.

It should be noted that the third data management message is merely an example. This is not limited in this application.

S552: The UDR configures the parameter of the slice #1 based on the third data management message.

Specifically, after receiving the third data management message, the UDR configures the parameter of the slice #1 in the PDU session policy control data.

In a possible implementation, when the PDU session policy control data includes a value of the authorized UE-Slice-MBR of the slice #1, the UDR deletes the value of the authorized UE-Slice-MBR, and stores the fifth UE-Slice-MBR.

In a possible implementation, when the PDU session policy control data includes a value of the authorized UE-Slice-MBR of the slice #1, the UDR updates the authorized UE-Slice-MBR to the fifth UE-Slice-MBR.

In a possible implementation, if a field of a subscribed UE-Slice-MBR corresponding to the slice #1 in the PDU session policy control data includes a value of a UE-Slice-MBR, the existing value is deleted, and the fifth UE-Slice-MBR is stored.

In a possible implementation, a field of the authorized UE-Slice-MBR of the slice #1 is newly added to the PDU session policy control data, and the fifth UE-Slice-MBR is stored in the field.

It should be noted that the storing the fifth UE-Slice-MBR may be specifically storing the fifth UE-Slice-MBR in the parameter of the slice #1 in the PDU session policy control data.

It should be noted that the foregoing manner of configuring the parameter of the slice #1 in the PDU session policy control data of the slice #1 is merely an example. This is not limited in this application.

S553: The UDR sends a third data management response message to the PCF.

Correspondingly, the PCF receives the third data management response message from the UDR.

The third data management response message indicates that the fifth UE-Slice-MBR is successfully configured.

S554: The PCF sends a third slice parameter configuration response message to the NEF.

Correspondingly, the NEF receives the third slice parameter configuration response message from the PCF.

The third slice parameter configuration response message indicates that the parameter of the slice #1 is successfully configured.

It should be noted that a sequence of performing S540 to S544 and S550 to S554 by the NEF is not limited in this application. For example, S540 to S544 and S550 to S554 may be simultaneously performed, or S550 to S554 are performed after S540 to S544 are performed, that is, after S544 is performed, and after the NEF receives the second slice parameter configuration message response message from the UDM.

S560: The NEF sends a first slice parameter configuration response message to the AF.

The first slice parameter configuration response message indicates that configuration of a parameter of a network slice accessed by the terminal device is completed.

Optionally, in S570, the UDR sends, to an SM-PCF, the fifth UE-Slice-MBR obtained through update.

Specifically, if the SM-PCF that serves the UE subscribes to an update service of the PDU session policy control data from the UDR, the UDR sends, to the SM-PCF that serves the UE, the fifth UE-Slice-MBR obtained through the update.

Optionally, in S580, the UDM sends, to an AMF, the fifth UE-Slice-MBR obtained through the update.

Specifically, after the UDM determines that the UE registers with a network, the UDM sends, to the AMF that serves the UE, the fifth UE-Slice-MBR obtained through the update.

Based on the foregoing solution, a new service message is introduced, the AF provides the UE-Slice-MBR through the NEF, and further, the NEF separately updates the UE-Slice-MBR in the access and mobility subscription data in the UDR through the UDM and the UE-Slice-MBR in the PDU session policy control data in the UDR through the PCF. In this way, the AMF and the PCF can obtain the same UE-Slice-MBR, thereby further ensuring implementation of a characteristic of the UE-Slice-MBR without sensing a network capability.

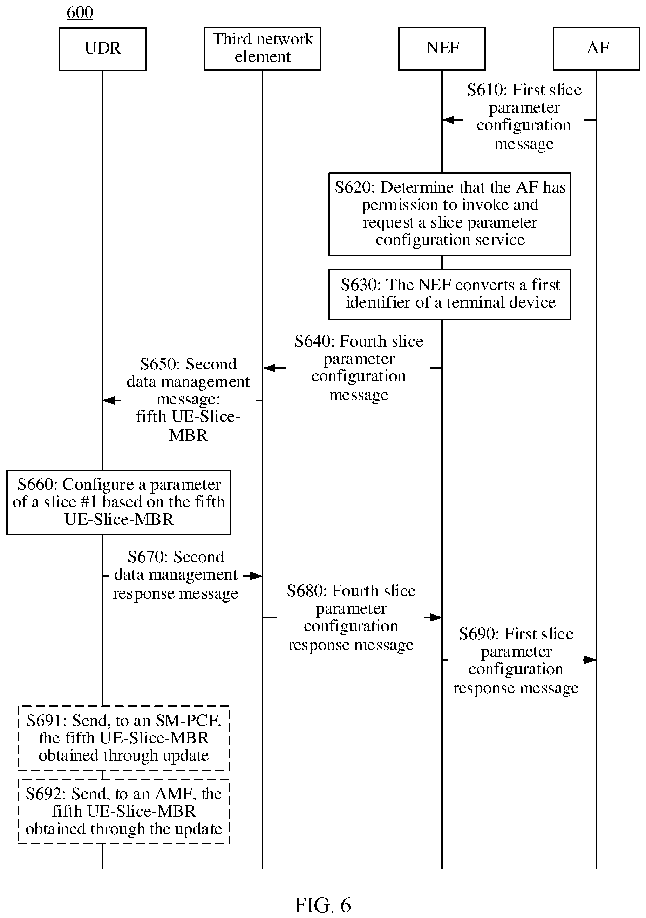

Further, when the third network element, that is, the UDM, in the method 500 has a capability of configuring the PDU session policy control data, or the fourth network element, that is, the PCF, has a capability of configuring the access and mobility subscription data, or the third network element is a new network element configured to configure information about a parameter of a slice in the UDR, the following method 600 may alternatively be used to obtain the UE-Slice-MBR. The following describes the method 600 in detail with reference to FIG. 6.

FIG. 6 is a diagram of a communication method 600 according to an embodiment of this application. The method 600 may include the following steps.

S610: An AF sends a first slice parameter configuration message to a NEF.

It should be noted that a process of S610 is similar to a process of S510. To avoid repetition, detailed descriptions thereof are omitted herein.

S620: The NEF determines that the AF has permission to invoke a slice parameter configuration service.

It should be noted that a process of S620 is similar to a process of S520. To avoid repetition, detailed descriptions thereof are omitted herein.

S630: The NEF converts a first identifier of a terminal device.

It should be noted that a process of S630 is similar to a process of S530. To avoid repetition, detailed descriptions thereof are omitted herein.

S640: The NEF sends a fourth slice parameter configuration message to a third network element.

Correspondingly, the third network element receives the fourth slice parameter configuration message from the NEF.

It should be noted that the third network element in the method 600 may be a UDM having a capability of configuring PDU session policy control data, or may be a PCF having a capability of configuring access and mobility subscription data, or may be a new network element configured to configure information about a parameter of a slice in a UDR. This is not limited in this application.

The fourth slice parameter configuration message is used to request to configure a related parameter of a slice #1.

Specifically, the fourth slice parameter configuration message includes identification information of the slice #1, a fifth UE-Slice-MBR, and a second identifier of the terminal device.

S650: The third network element sends a second data management message to a UDR.

Correspondingly, the UDR receives the second data management message from the third network element.

The second data management message includes the fifth UE-Slice-MBR.

The second data management message is used to request to configure access and mobility subscription data and PDU session policy control data.

Specifically, the second data management message includes: a data set identifier and a data keyword.

The data set identifier indicates a data set in the UDR, and the data keyword indicates further data in the data set.

Optionally, the data management message may further include: a data subset identifier and a data subkeyword.

In a possible implementation, the second data management message specifically includes: a first data set identifier, a second data set identifier, a data keyword, a data subkeyword, and data.

The first data set identifier indicates subscription data, the second data set identifier indicates policy data, the data keyword indicates the terminal device, and the data subkeyword indicates the slice #1. The fifth UE-Slice-MBR is used as the data.

That the first data set identifier indicates subscription data may be specifically the following: A first data set identifier field is set as a subscription data type to indicate the subscription data, or a first data set identifier field includes a subscription data identifier to indicate the subscription data. That the second data set identifier indicates policy data may be specifically the following: A second data set identifier field is set as a policy data type to indicate the policy data, or a second data set identifier field includes a policy data identifier to indicate the policy data. That the data keyword indicates the terminal device may be specifically the following: A data keyword field is set as an SUPI of the terminal device to indicate the terminal device, or a data keyword field includes an SUPI of the terminal device to indicate the terminal device. That the data subkey field indicates the slice #1 may be specifically the following: A data subkey field is set as the identification information of the slice #1 to indicate the slice #1, or a data subkey field includes the identification information of the slice #1 to indicate the slice #1.

In a possible implementation, the second data management message specifically includes: a first data set identifier, a second data set identifier, a data keyword, a data subkeyword, a data subset identifier, and data.

The first data set identifier indicates subscription data, the second data set identifier indicates policy data, the data keyword indicates the terminal device, the first data subset identifier indicates the access and mobility subscription data, the second data subset identifier indicates the PDU session policy control data, and the data subkeyword indicates the slice #1. The fifth UE-Slice-MBR is used as the data.

That the first data set identifier indicates subscription data may be specifically the following: A first data set identifier field is set as a subscription data type to indicate the subscription data, or a first data set identifier field includes a subscription data identifier to indicate the subscription data. That the second data set identifier indicates policy data may be specifically the following: A second data set identifier field is set as a policy data type to indicate the policy data, or a second data set identifier field includes a policy data identifier to indicate the policy data. That the data keyword indicates the terminal device may be specifically the following: A data keyword field is set as an SUPI of the terminal device to indicate the terminal device, or a data keyword field includes an SUPI of the terminal device to indicate the terminal device. That the first data subset identifier indicates the access and mobility subscription data may be specifically the following: A first data subset identifier field is set as an access and mobility subscription data type, or a first data subset identifier field includes an access and mobility subscription data identifier to indicate the access and mobility subscription data. That the second data subset identifier indicates the PDU session policy control data may be specifically the following: A second data subset identifier field is set as a PDU session policy control data type, or a second data subset identifier field includes a PDU session policy control data identifier, to indicate the PDU session policy control data. That the data subkey field indicates the slice #1 may be specifically the following: A data subkey field is set as the identification information of the slice #1 to indicate the slice #1, or a data subkey field includes the identification information of the slice #1 to indicate the slice #1.

In a possible implementation, the second data management message specifically includes: a first data set identifier, a second data set identifier, a data keyword, and data.

The first data set identifier indicates subscription data, the second data set identifier indicates policy data, the data keyword indicates the terminal device, and the identification information of the slice #1 and the fifth UE-Slice-MBR are used as the data.

That the first data set identifier indicates subscription data may be specifically the following: A first data set identifier field is set as a subscription data type to indicate the subscription data, or a first data set identifier field includes a subscription data identifier to indicate the subscription data. That the second data set identifier indicates policy data may be specifically the following: A second data set identifier field is set as a policy data type to indicate the policy data, or a second data set identifier field includes a policy data identifier to indicate the policy data. That the data keyword indicates the terminal device may be specifically the following: A data keyword field is set as an SUPI of the terminal device to indicate the terminal device, or a data keyword field includes an SUPI of the terminal device to indicate the terminal device.

It should be noted that the second data management message is merely an example. This is not limited in this application.

S660: The UDR configures a parameter of the slice #1 based on the second data management message.

Specifically, after receiving the third data management message, the UDR configures the parameter of the slice #1 in the access and mobility subscription data of the slice #1 and the parameter of the slice #1 in the PDU session policy control data of the slice #1.

In a possible implementation, when the access and mobility subscription data and the PDU session policy control data include a value of the authorized UE-Slice-MBR of the slice #1, the UDR deletes the value of the authorized UE-Slice-MBR, and stores the fifth UE-Slice-MBR.

In a possible implementation, when the access and mobility subscription data and the PDU session policy control data include the authorized UE-Slice-MBR of the slice #1, the UDR updates the authorized UE-Slice-MBR to the fifth UE-Slice-MBR.

In a possible implementation, if a field of a subscribed UE-Slice-MBR corresponding to the slice #1 in the access and mobility subscription data and the PDU session policy control data includes a value of a UE-Slice-MBR, the existing value is deleted, and the fifth UE-Slice-MBR is stored.

In a possible implementation, a field of the authorized UE-Slice-MBR of the slice #1 is newly added to the access and mobility subscription data and the PDU session policy control data, and the fifth UE-Slice-MBR is stored in the field.

It should be noted that the storing the fifth UE-Slice-MBR may be specifically storing the fifth UE-Slice-MBR in the parameter of the slice #1 in the access and mobility subscription data and the parameter of the slice #1 in the PDU session policy control data.

It should be noted that the foregoing manner of configuring the parameter of the slice #1 in the access and mobility subscription data of the slice #1 and the parameter of the slice #1 in the PDU session policy control data of the slice #1 is merely an example. This is not limited in this application.

S670: The UDR sends a second data management response message to the third network element.

Correspondingly, the third network element receives the second data management response message from the UDR.

The second data management response message indicates that the fifth UE-Slice-MBR is successfully configured.

S680: The third network element sends a fourth slice parameter configuration response message to the NEF.

Correspondingly, the NEF receives the fourth slice parameter configuration response message from the third network element.

The fourth slice parameter configuration response message indicates that the parameter of the slice #1 is successfully configured.

S690: The NEF sends first slice parameter configuration response information to the AF.

The first slice parameter configuration response information indicates that configuration of a parameter of a network slice accessed by the terminal device is completed.

Optionally, in S691, the UDR sends, to an SM-PCF, the fifth UE-Slice-MBR obtained through update.

For example, if the SM-PCF that serves UE subscribes to an update service of the PDU session policy control data from the UDR, the UDR sends, to the SM-PCF that serves the UE, the fifth UE-Slice-MBR obtained through the update.

For example, if a UDM that serves the UE subscribes to an update service of the subscription data from the UDR, the UDR sends, to the SM-PCF that serves the UE, the fifth UE-Slice-MBR obtained through the update.

Optionally, in S692, the UDM sends, to an AMF, the fifth UE-Slice-MBR obtained through the update.

Specifically, after the UDM determines that the UE registers with a network, the UDM sends, to the AMF that serves the UE, the fifth UE-Slice-MBR obtained through the update.

Based on the foregoing solution, a new service message is introduced, the AF provides the UE-Slice-MBR through the NEF, and further, the NEF updates the UE-Slice-MBR of the slice #1 in the access and mobility subscription data in the UDR and the UE-Slice-MBR of the slice #1 in the PDU session policy control data in the UDR through the UDM or a PCF. In this way, the AMF and the PCF can obtain the same UE-Slice-MBR, thereby further ensuring implementation of a characteristic of the UE-Slice-MBR without sensing a network capability.

It may be understood that the examples in FIG. 2 to FIG. 6 in embodiments of this application are merely intended to help a person skilled in the art understand embodiments of this application, but are not intended to limit embodiments of this application to specific scenarios in the examples. Clearly, a person skilled in the art may make various equivalent modifications or changes based on the examples in FIG. 2 to FIG. 6, and such modifications or changes also fall within the scope of embodiments of this application.

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in embodiments may be mutually referenced or explained in embodiments. This is not limited.

It may be further understood that various numeric sequence numbers in embodiments of this application do not mean execution sequences, but are merely for differentiation for ease of description, and therefore, should not constitute any limitation on an implementation process of embodiments of this application.

It may be further understood that names of some messages, such as a data management message, are involved in embodiments of this application. It should be understood that the names do not limit the scope of the protection of embodiments of this application.

It may be further understood that, in the foregoing method embodiments, the methods and the operations implemented by the first network element may alternatively be implemented by a component (for example, a chip or a circuit) of the first network element. In addition, the methods and the operations implemented by the unified data repository network element may alternatively be implemented by a component (for example, a chip or a circuit) of the unified data repository network element. This is not limited. Corresponding to the methods provided in the foregoing method embodiments, embodiments of this application further provide corresponding apparatuses. The apparatus includes a corresponding module configured to perform the foregoing method embodiments. The module may be software, hardware, or a combination of software and hardware. It may be understood that the technical features described in the method embodiments are also applicable to the following apparatus embodiments.

It should be understood that the first network element, the unified data repository network element, the access and mobility management function network element, the session management function network element, the second network element, the network exposure function network element, the application function network element, the third network element, and the fourth network element may perform a part or all of the steps in the foregoing embodiments. These steps or operations are merely examples. In embodiments of this application, other operations or variations of various operations may alternatively be performed. In addition, the steps may be performed in another order different from that presented in the foregoing embodiments, and not all the operations in the foregoing embodiments are to be performed.

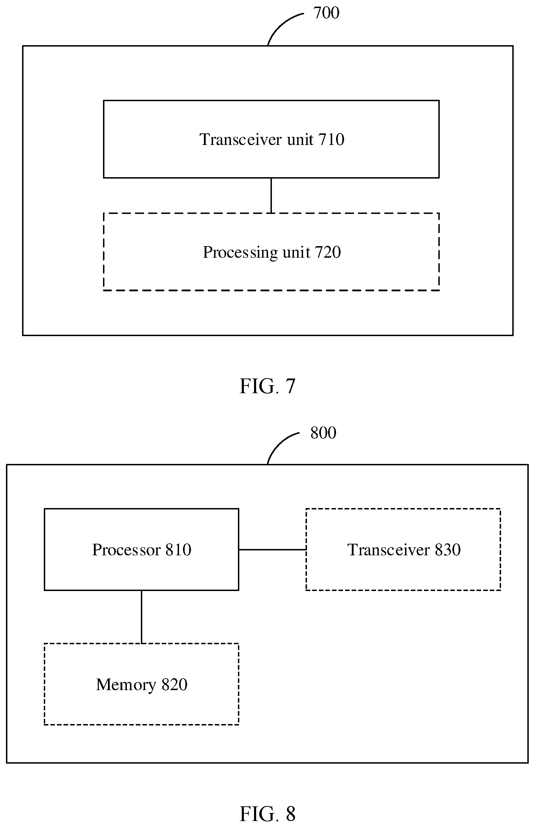

The foregoing describes in detail the communication methods provided in embodiments of this application with reference to FIG. 2 to FIG. 6. The following describes in detail the communication apparatuses provided in embodiments of this application with reference to FIG. 7 to FIG. 9. It should be understood that descriptions of apparatus embodiments correspond to the descriptions of the method embodiments. Therefore, for content that is not described in detail, refer to the foregoing method embodiments. For brevity, a part of content is not described again.

FIG. 7 is a block diagram of a communication apparatus according to an embodiment of this application. The apparatus 700 includes a transceiver unit 710, where the transceiver unit 710 may be configured to implement a corresponding communication function. The transceiver unit 710 may also be referred to as a communication interface or a communication unit.

Optionally, the apparatus 700 may further include a processing unit 720, where the processing unit 720 may be configured to perform data processing.

Optionally, the apparatus 700 further includes a storage unit. The storage unit may be configured to store instructions and/or data. The processing unit 720 may read the instructions and/or the data in the storage unit, to enable the apparatus to implement actions of different terminal devices in the foregoing method embodiments, for example, actions of the first network element, the unified data repository network element, the access and mobility management function network element, the session management function network element, the second network element, the network exposure function network element, the application function network element, the third network element, or the fourth network element.

The apparatus 700 may be configured to perform actions performed by the first network element, the unified data repository network element, the access and mobility management function network element, the session management function network element, the second network element, the network exposure function network element, the application function network element, the third network element, or the fourth network element in the foregoing method embodiments. In this case, the apparatus 700 may be the first network element, the unified data repository network element, the access and mobility management function network element, the session management function network element, the second network element, the network exposure function network element, the application function network element, the third network element, or the fourth network element, or a component of the first network element, the unified data repository network element, the access and mobility management function network element, the session management function network element, the second network element, the network exposure function network element, the application function network element, the third network element, or the fourth network element. The transceiver unit 710 is configured to perform sending and receiving-related operations of the first network element, the unified data repository network element, the access and mobility management function network element, the session management function network element, the second network element, the network exposure function network element, the application function network element, the third network element, or the fourth network element in the foregoing method embodiments. The processing unit 720 is configured to perform processing-related operations of the first network element, the unified data repository network element, the access and mobility management function network element, the session management function network element, the second network element, the network exposure function network element, the application function network element, the third network element, or the fourth network element in the foregoing method embodiments.

It should be understood that the apparatus 700 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 700 may be specifically the first network element, the unified data repository network element, the access and mobility management function network element, the session management function network element, the second network element, the network exposure function network element, the application function network element, the third network element, or the fourth network element in the foregoing embodiments, and may be configured to perform procedures and/or steps corresponding to the first network element, the unified data repository network element, the access and mobility management function network element, the session management function network element, the second network element, the network exposure function network element, the application function network element, the third network element, or the fourth network element in the foregoing method embodiments. Alternatively, the apparatus 700 may be specifically the first network element, the unified data repository network element, the access and mobility management function network element, the session management function network element, the second network element, the network exposure function network element, the application function network element, the third network element, or the fourth network element in the foregoing embodiments, and may be configured to perform procedures and/or steps corresponding to the first network element, the unified data repository network element, the access and mobility management function network element, the session management function network element, the second network element, the network exposure function network element, the application function network element, the third network element, or the fourth network element in the foregoing method embodiments. To avoid repetition, details are not described herein again.

The apparatus 700 in the foregoing solutions has functions of implementing corresponding steps performed by the first network element, the unified data repository network element, the access and mobility management function network element, the session management function network element, the second network element, the network exposure function network element, the application function network element, the third network element, or the fourth network element in the foregoing methods. Alternatively, the apparatus 700 in the foregoing solutions has functions of implementing corresponding steps performed by the first network element, the unified data repository network element, the access and mobility management function network element, the session management function network element, the second network element, the network exposure function network element, the application function network element, the third network element, or the fourth network element in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform sending and receiving operations and a related processing operation in the method embodiments.

In addition, the transceiver unit 710 may alternatively be a transceiver circuit (for example, may include a receiving circuit and a sending circuit), and the processing unit may be a processing circuit.

It should be noted that the apparatus in FIG. 7 may be a network element or a device in the foregoing embodiments, or may be a chip or a chip system, for example, a system-on-chip (system-on-chip, SoC). The transceiver unit may be an input/output circuit or a communication interface. The processing unit is a processor, a microprocessor, or an integrated circuit integrated on the chip. This is not limited herein.

As shown in FIG. 8, an embodiment of this application provides another communication apparatus 800. The apparatus 800 includes a processor 810. The processor 810 is coupled to a memory 820. The memory 820 is configured to store a computer program or instructions and/or data. The processor 810 is configured to execute the computer program or the instructions stored in the memory 820, or read the data stored in the memory 820, to perform the methods in the foregoing method embodiments.

Optionally, there are one or more processors 810.

Optionally, there are one or more memories 820.

Optionally, the memory 820 and the processor 810 are integrated together, or are disposed separately.

Optionally, as shown in FIG. 8, the apparatus 800 may further include a transceiver 830. The transceiver 830 is configured to receive and/or send signals. For example, the processor 810 is configured to control the transceiver 830 to receive and/or send the signals.

In a solution, the apparatus 800 is configured to implement operations performed by the first network element, the unified data repository network element, the access and mobility management function network element, the session management function network element, the second network element, the network exposure function network element, the application function network element, the third network element, or the fourth network element in the foregoing method embodiments.

For example, the processor 810 is configured to execute the computer program or the instructions stored in the memory 820 to implement related operations of the first network element in the foregoing method embodiments, for example, the first network element in any one of the embodiments shown in FIG. 2 to FIG. 4, or implement the method of the first network element in any one of the embodiments shown in FIG. 2 to FIG. 4.

It should be understood that the processor mentioned in embodiments of this application may be a central processing unit (central processing unit, CPU), and may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that the memory described in this specification is intended to include, but is not limited to, these and any other suitable type of memory.

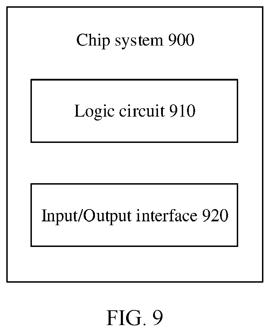

As shown in FIG. 9, an embodiment of this application provides a chip system 900. The chip system 900 (or may be referred to as a processing system) includes a logic circuit 910 and an input/output interface (input/output interface) 920.

The logic circuit 910 may be a processing circuit in the chip system 900. The logic circuit 910 may be coupled to a storage unit, and invoke instructions in the storage unit, to enable the chip system 900 to implement the methods and functions in embodiments of this application. The input/output interface 920 may be an input/output circuit in the chip system 900, and outputs information processed by the chip system 900, or inputs to-be-processed data or signaling information to the chip system 900 for processing.

In a solution, the chip system 900 is configured to implement operations performed by the first network element, the unified data repository network element, the access and mobility management function network element, the session management function network element, the second network element, the network exposure function network element, the application function network element, the third network element, or the fourth network element in the foregoing method embodiments.

For example, the logic circuit 910 is configured to implement processing-related operations of the first network element in the foregoing method embodiments, such as processing-related operations of the first network element in any one of the embodiments shown in FIG. 2 to FIG. 4. The input/output interface 920 is configured to implement sending and/or receiving-related operations of the first network element in the foregoing method embodiments, such as sending and/or receiving-related operations performed by the first network element in any one of the embodiments shown in FIG. 2 to FIG. 4.

An embodiment of this application further provides a computer-readable storage medium, storing computer instructions used to implement the method performed by the first network element, the unified data repository network element, the access and mobility management function network element, the session management function network element, the second network element, the network exposure function network element, the application function network element, the third network element, or the fourth network element in the foregoing method embodiments.

For example, when a computer program is executed by a computer, the computer is enabled to implement the method performed by the first network element, the unified data repository network element, the access and mobility management function network element, the session management function network element, the second network element, the network exposure function network element, the application function network element, the third network element, or the fourth network element in the foregoing method embodiments.

An embodiment of this application further provides a computer program product, including instructions. When the instructions are executed by a computer, the method performed by the first network element, the unified data repository network element, the access and mobility management function network element, the session management function network element, the second network element, the network exposure function network element, the application function network element, the third network element, or the fourth network element in the foregoing method embodiments is implemented.

For explanations and beneficial effects of related content of any one of the apparatuses provided above, refer to the corresponding method embodiments provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

A part or all of the foregoing embodiments may be implemented by software, hardware, firmware, or any combination thereof. When the software is used to implement the embodiments, a part or all of the embodiments may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (solid-state disk, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the scope of the protection of this application. Any variation or replacement readily figured out by a person skilled in the art within the technical scope disclosed in this application shall fall within the scope of the protection of this application. Therefore, the scope of the protection of this application shall be subject to the scope of the protection of the claims.

## Claims

1. A communication method, comprising:
receiving, by a first network element, a first per UE per slice-maximum bit rate UE-Slice-MBR of a slice #1 of a terminal device from an access and mobility management function network element AMF, wherein the first UE-Slice-MBR is provided by a slice authentication, authorization, and accounting AAA server;
determining, by the first network element, a second UE-Slice-MBR based on the first UE-Slice-MBR, wherein the second UE-Slice-MBR is an authorized UE-Slice-MBR; and
sending, by the first network element, a first data management message to a unified data repository network element UDR, wherein the first data management message comprises the second UE-Slice-MBR.

2. The method according to claim 1, wherein the receiving, by a first network element, a first UE-Slice-MBR from an AMF comprises:
receiving, by the first network element, ueSliceMbr from the AMF, wherein the ueSliceMbr comprises the first UE-Slice-MBR.

3. The method according to claim 1 or 2, wherein the first data management message further comprises:
a data set identifier and a data keyword, wherein
the data set identifier indicates policy data, and the data keyword indicates the terminal device.

4. The method according to claim 3, wherein the first data management message further comprises:
a data subset identifier and/or a data subkeyword, wherein
the data subset identifier indicates protocol data unit PDU session policy control data, and the data subkeyword indicates the slice #1.

5. The method according to claim 3, wherein the first data management message further comprises identification information of the slice #1.

6. The method according to any one of claims 1 to 5, wherein the sending, by the first network element, a first data management message to a UDR comprises:
determining, by the first network element, that the terminal device is a non-roaming terminal device; and
sending, by the first network element, the first data management message to the UDR.

7. The method according to any one of claims 1 to 6, wherein the first network element is a policy control function network element.

8. A communication method, comprising:
receiving, by a unified repository network element UDR, an authorized UE-Slice-MBR of a slice #1 of a terminal device; and
configuring, by the UDR, a parameter of the slice #1 based on the authorized UE-Slice-MBR.

9. The method according to claim 8, wherein the receiving, by a UDR, an authorized UE-Slice-MBR comprises:
receiving, by the UDR, a first data management message from a first network element, wherein the first data management message comprises a second UE-Slice-MBR, and the second UE-Slice-MBR is the authorized UE-Slice-MBR.

10. The method according to claim 9, wherein the first data management message further comprises:
a data set identifier and a data keyword, wherein
the data set identifier indicates policy data, and the data keyword indicates the terminal device.

11. The method according to claim 10, wherein the first data management message further comprises:
a data subset identifier and/or a data subkeyword, wherein
the data subset identifier indicates protocol data unit PDU session policy control data, and the data subkeyword indicates the slice #1.

12. The method according to any one of claims 9 to 11, wherein the configuring, by the UDR, a parameter of the slice #1 based on the authorized UE-Slice-MBR comprises:
storing, by the UDR, the second UE-Slice-MBR in a parameter of the slice #1 in protocol data unit PDU session policy control data.

13. The method according to claim 12, wherein the storing, by the UDR, the authorized UE-Slice-MBR in the PDU session policy control information of the slice #1 comprises:
when there is a third UE-Slice-MBR stored in the UDR, updating, by the UDR, the third UE-Slice-MBR to the second UE-Slice-MBR.

14. The method according to claim 12, wherein the storing, by the UDR, the authorized UE-Slice-MBR in the PDU session policy control information of the slice #1 comprises:
when there is a fourth UE-Slice-MBR stored in the UDR, adding, by the UDR, the second UE-Slice-MBR to the parameter of the slice #1 in the PDU session policy control information, wherein
the fourth UE-Slice-MBR is a subscribed UE-Slice-MBR.

15. The method according to claim 8, wherein the receiving, by a UDR, an authorized UE-Slice-MBR comprises:
receiving, by the UDR, a second data management message from a third network element, wherein the second data management message comprises a fifth UE-Slice-MBR, and the fifth UE-Slice-MBR is the authorized UE-Slice-MBR.

16. The method according to claim 15, wherein the second data management message further comprises:
a data set identifier and a data keyword, wherein
the data set identifier indicates subscription data, and the data keyword indicates the terminal device.

17. The method according to claim 16, wherein the second data management message further comprises:
a data subset identifier and/or a data subkeyword, wherein
the data subset identifier indicates access and mobility subscription data, and the data subkeyword indicates the slice #1.

18. The method according to any one of claims 15 to 17, wherein the configuring, by the UDR, a parameter of the slice #1 based on the authorized UE-Slice-MBR comprises:
storing, by the UDR, the fifth UE-Slice-MBR in a parameter of the slice #1 in access and mobility subscription data.

19. The method according to claim 15, wherein the second data management message further comprises:
a first data set identifier, a second data set identifier, and a data keyword, wherein
the first data set identifier indicates subscription data, the second data set identifier indicates policy data, and the data keyword indicates the terminal device.

20. The method according to claim 19, wherein the configuring, by the UDR, a parameter of the slice #1 based on the authorized UE-Slice-MBR comprises:
separately storing, by the UDR, the fifth UE-Slice-MBR in a parameter of the slice #1 in access and mobility subscription data and a parameter of the slice #1 in PDU session policy control data.

21. The method according to claim 8, wherein the receiving, by a UDR, an authorized UE-Slice-MBR comprises:
receiving, by the UDR, a third data management message from a fourth network element, wherein the third data management message comprises a fifth UE-Slice-MBR, and the fifth UE-Slice-MBR is the authorized UE-Slice-MBR.

22. The method according to claim 21, wherein the receiving, by the UDR, a third data management message from a fourth network element comprises:
sending, by the UDR, a second data management response message to a third network element, wherein the second data management response message indicates that the fifth UE-Slice-MBR is successfully configured; and
receiving, by the UDR, the third data management message from the fourth network element.

23. The method according to claim 21 or 22, wherein the third data management message further comprises:
a data set identifier and a data keyword, wherein
the data set identifier indicates policy data, and the data keyword indicates the terminal device.

24. The method according to claim 23, wherein the third data management message further comprises:
a data subset identifier and/or a data subkeyword, wherein
the data subset identifier indicates PDU session policy control data, and the data subkeyword indicates the slice #1.

25. The method according to any one of claims 21 to 24, wherein the configuring, by the UDR, a parameter of the slice #1 based on the authorized UE-Slice-MBR comprises:
storing, by the UDR, the fifth UE-Slice-MBR in a parameter of the slice #1 in PDU session policy control information.

26. A communication method, comprising:
receiving, by a network exposure function network element NEF, a first slice parameter configuration message from an application function network element AF, wherein the first slice parameter configuration message comprises identification information of a slice #1 of a terminal device, a fifth per UE per slice-maximum bit rate UE-Slice-MBR, and a first identifier of the terminal device, and the fifth UE-Slice-MBR is an authorized UE-Slice-MBR; and
sending, by the NEF, a second slice parameter configuration message to a third network element based on the first slice parameter configuration message, wherein the second slice parameter configuration message comprises the identification information of the slice #1, the fifth UE-Slice-MBR, and a second identifier of the terminal device, and the second identifier of the terminal device is determined by the NEF based on the first identifier of the terminal device.

27. The method according to claim 26, wherein the method further comprises:
sending, by the NEF, a third slice parameter configuration message to a fourth network element based on the first slice parameter configuration message, wherein the third slice parameter configuration message comprises the identification information of the slice #1, the fifth UE-Slice-MBR, and the second identifier of the terminal device.

28. The method according to claim 27, wherein the sending, by the NEF, a third slice parameter configuration message to a fourth network element based on the first slice parameter configuration message comprises:
receiving, by the NEF, a second slice parameter configuration message response message from the third network element, wherein the second slice parameter configuration message response message indicates that a parameter of the slice #1 is successfully configured; and
sending, by the NEF, the third slice parameter configuration message to the fourth network element.

29. The method according to any one of claims 26 to 28, wherein the method further comprises:
determining, by the NEF, that the AF has permission to invoke a slice parameter configuration service; and
sending, by the NEF, the second slice parameter configuration message to the third network element.

30. The method according to claim 29, wherein the method further comprises:
sending, by the NEF, the first identifier of the terminal device to a unified data management network element UDM; and
receiving, by the NEF, the second identifier of the terminal device from the UDM.

31. The method according to claim 29, wherein the method further comprises:
sending, by the NEF, the first identifier of the terminal device to a binding support function network element BSF and/or a policy control function network element PCF; and
receiving, by the NEF, the second identifier of the terminal device from the BSF and/or the PCF.

32. A communication apparatus, comprising:
a processor, configured to execute a computer program stored in a memory, to enable the communication apparatus to perform the method according to any one of claims 1 to 31.

33. A computer-readable storage medium, wherein the computer-readable storage medium stores a computer program or instructions; and when the computer program or the instructions are executed by a processor, the method according to any one of claims 1 to 31 is performed.

34. A computer program product comprising instructions, wherein when the computer program product runs on a computer, the method according to any one of claims 1 to 31 is performed.

35. A chip system, comprising a processor, configured to invoke a computer program or instructions from a memory and run the computer program or the instructions, to enable a communication apparatus in which the chip system is installed to implement the method according to any one of claims 1 to 31.

36. A communication apparatus, wherein the apparatus comprises a module configured to perform the method according to any one of claims 1 to 31.
